(19) Europäisches Patentamt / European Patent Office / Office européen des brevets

(11) **EP 4 287 144 A1**

(12) **EUROPEAN PATENT APPLICATION**
published in accordance with Art. 153(4) EPC

(43) Date of publication:
**06.12.2023 Bulletin 2023/49**

(21) Application number: **22880046.2**

(22) Date of filing: **05.09.2022**

(51) International Patent Classification (IPC):
*G06V 20/40* (2022.01)   *G06V 10/80* (2022.01)
*G06V 10/40* (2022.01)   *G06F 18/40* (2023.01)

(52) Cooperative Patent Classification (CPC):
**G06V 10/40; G06V 10/80; G06V 20/40**

(86) International application number:
**PCT/CN2022/116947**

(87) International publication number:
**WO 2023/061102 (20.04.2023 Gazette 2023/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.10.2021   CN 202111202734**

(71) Applicant: **Tencent Technology (Shenzhen) Company Limited**
**Shenzhen, Guangdong 518057 (CN)**

(72) Inventors:
• **HU, Yihui**
  **Shenzhen, Guangdong 518057 (CN)**
• **YANG, Weidong**
  **Shenzhen, Guangdong 518057 (CN)**
• **CHEN, Yu**
  **Shenzhen, Guangdong 518057 (CN)**

(74) Representative: **Nederlandsch Octrooibureau**
**P.O. Box 29720**
**2502 LS The Hague (NL)**

(54) **VIDEO BEHAVIOR RECOGNITION METHOD AND APPARATUS, AND COMPUTER DEVICE AND STORAGE MEDIUM**

(57)   A video behavior recognition method, which is executed by a computer device, and comprises: extracting video image features from at least two frames of target video images (202); performing contribution adjustment on spatial features of the video image features, so as to obtain an intermediate image feature (204); fusing, on the basis of prior information, a time feature of the intermediate image feature with a cohesion feature corresponding to the time feature, so as to obtain a fused feature, wherein the prior information is obtained according to change information of the intermediate image feature in a time dimension, and the cohesion feature is obtained by performing attention processing on the time feature (206); performing time feature contribution adjustment on the fused feature, so as to obtain a behavior recognition feature (208); and performing video behavior recognition on the basis of the behavior recognition feature (210).

Extract a video image feature from at least two frames of target video images — 202

Perform contribution adjustment on a spatial feature of the video image feature to obtain an intermediate image feature — 204

Fuse, based on priori information, a temporal feature of the intermediate image feature and a cohesive feature corresponding to the temporal feature to obtain a fused feature, the priori information being obtained according to change information of the intermediate image feature in a temporal dimension, and the cohesive feature being obtained by performing attention processing on the temporal feature — 206

Perform temporal feature contribution adjustment on the fused feature to obtain a behavior recognition feature — 208

Perform video behavior recognition based on the behavior recognition feature — 210

FIG. 2

EP 4 287 144 A1

**Description**

This application claims priority to Chinese Patent Application No. 2021112027344 filed with the National Intellectual Property Administration on October 15, 2021 and entitled "VIDEO BEHAVIOR RECOGNITION METHOD AND APPARATUS, AND COMPUTER DEVICE AND STORAGE MEDIUM", which is incorporated by reference in its entirety.

**FIELD**

This application relates to the field of computer technologies, and in particular, to a video behavior recognition method and apparatus, a computer device, a storage medium, and a computer program product.

**BACKGROUND**

With the development of computer technology, computer vision technology has been widely applied in various fields such as industry, medical treatment, social intercourse, and navigation. Through computer vision, a computer may replace human eyes to perform visual perception such as recognition and measurement on a target to simulate biological vision. Video behavior recognition is one of important topics in the field of computer vision. Action behaviors, for example, various action behaviors of eating, running, and talking, of a target object in a given video may be recognized based on the video behavior recognition.

At present, in video behavior recognition processing, behavior recognition is often performed by extracting a feature from a video. However, in conventional video behavior recognition processing, the extracted feature cannot effectively reflect behavior information in the video, which results in low accuracy of video behavior recognition.

**SUMMARY**

According to various embodiments of this application, a video behavior recognition method and apparatus, a computer device, a storage medium, and a computer program product are provided.

The video behavior recognition method is performed by a computer device. The method includes:

extracting a video image feature from at least two video images;

performing contribution adjustment on a spatial feature of the video image feature to obtain an intermediate image feature;

fusing, based on priori information, a temporal feature of the intermediate image feature and a cohesive feature corresponding to the temporal feature to obtain a fused feature, the priori information being obtained according to change information of the intermediate image feature in a temporal dimension, and the cohesive feature being obtained by performing attention processing on the temporal feature;

performing temporal feature contribution adjustment on the fused feature to obtain a behavior recognition feature; and

performing video behavior recognition based on the behavior recognition feature.

The video behavior recognition apparatus includes: a video image feature extraction module, a spatial feature contribution adjustment module, a feature fusion module, a temporal feature contribution adjustment module, and a video behavior recognition module. The video image feature extraction module is configured to extract a video image feature from at least two video images. The spatial feature contribution adjustment module is configured to perform contribution adjustment on a spatial feature of the video image feature to obtain an intermediate image feature. The feature fusion module is configured to fuse, based on priori information, a temporal feature of the intermediate image feature and a cohesive feature corresponding to the temporal feature to obtain a fused feature, the priori information is obtained according to change information of the intermediate image feature in a temporal dimension, and the cohesive feature is obtained by performing attention processing on the temporal feature. The temporal feature contribution adjustment module is configured to perform temporal feature contribution adjustment on the fused feature to obtain a behavior recognition feature. The video behavior recognition module is configured to perform video behavior recognition based on the behavior recognition feature.

The computer device includes a memory and a processor, the memory stores computer-readable instructions, and the processor, when executing the computer-readable instructions, implements the following steps:

extracting a video image feature from at least two video images;

performing contribution adjustment on a spatial feature of the video image feature to obtain an intermediate image feature;

fusing, based on priori information, a temporal feature of the intermediate image feature and a cohesive feature corresponding to the temporal feature to obtain a fused feature, the priori information being obtained according to change information of the intermediate image feature in a temporal dimension, and the cohesive feature being obtained by performing attention processing on the temporal feature;

performing temporal feature contribution adjustment on the fused feature to obtain a behavior recognition feature; and

performing video behavior recognition based on the behavior recognition feature.

The computer-readable storage medium stores computer-readable instructions, and the computer-readable instructions, when executed by the processor, implement the following steps:

extracting a video image feature from at least two video images;

performing contribution adjustment on a spatial feature of the video image feature to obtain an intermediate image feature;

fusing, based on priori information, a temporal feature of the intermediate image feature and a cohesive feature corresponding to the temporal feature to obtain a fused feature, the priori information being obtained according to change information of the intermediate image feature in a temporal dimension, and the cohesive feature being obtained by performing attention processing on the temporal feature;

performing temporal feature contribution adjustment on the fused feature to obtain a behavior recognition feature; and

performing video behavior recognition based on the behavior recognition feature.

The computer-readable storage medium includes computer-readable instructions, and the computer-readable instructions, when executed by a processor, implement the following steps:

extracting a video image feature from at least two video images;

performing contribution adjustment on a spatial feature of the video image feature to obtain an intermediate image feature;

fusing, based on priori information, a temporal feature of the intermediate image feature and a cohesive feature corresponding to the temporal feature to obtain a fused feature, the priori information being obtained according to change information of the intermediate image feature in a temporal dimension, and the cohesive feature being obtained by performing attention processing on the temporal feature;

performing temporal feature contribution adjustment on the fused feature to obtain a behavior recognition feature; and

performing video behavior recognition based on the behavior recognition feature.

Details of one or more embodiments of this application are provided in the drawings and descriptions below. Other features, objectives, and advantages of this application become apparent from the specification, the drawings, and the claims.

**BRIEF DESCRIPTION OF THE DRAWINGS**

To describe the technical solutions in the embodiments of this application or in the conventional art more clearly, the following briefly introduces the drawings for describing the embodiments or the conventional art. Apparently, the drawings in the following description show merely some embodiments of this application, and a person of ordinary skill in the art may still derive other drawings from the drawings without creative efforts.

FIG. 1 is a diagram of an application environment of a video behavior recognition method according to an embodiment.

FIG. 2 is a schematic flowchart of a video behavior recognition method according to an embodiment.

FIG. 3 is a schematic flowchart of a process for performing cohesion processing on a temporal feature according to an embodiment.

FIG. 4 is a schematic structural diagram of a video behavior recognition model according to an embodiment.

FIG. 5 is a schematic flowchart of a process for performing weighting and fusion of a structural parameter according to an embodiment.

FIG. 6 is a schematic diagram of a process for determining a structural parameter according to an embodiment.

FIG. 7 is a schematic flowchart of a process for performing feature fusion based on priori information according to an embodiment.

FIG. 8 is a schematic flowchart of highly cohesive processing according to an embodiment.

FIG. 9 is a structural block diagram of a video behavior recognition apparatus according to an embodiment.

FIG. 10 is a diagram of an internal structure of a computer device according to an embodiment.

## DESCRIPTION OF EMBODIMENTS

To make the objectives, technical solutions, and advantages of this application clearer, this application is further described below in detail with reference to the drawings and the embodiments. It is to be understood that specific embodiments described here are only used for explaining this application, and are not used for limiting this application.

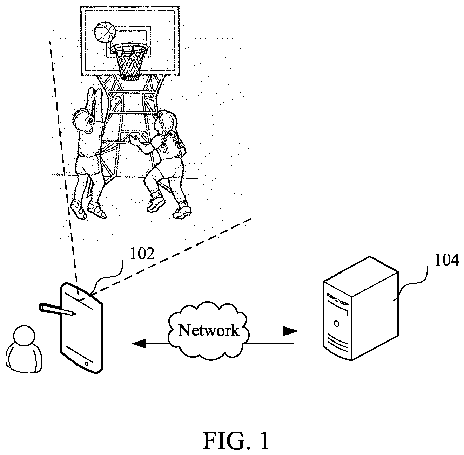

A video behavior recognition method in this application may be applied to an application environment as shown in FIG. 1. A terminal 102 communicates with a server 104 through a network. The terminal 102 shoots a target object to obtain a video, and transmits the obtained video to the server 104. The server 104 extracts at least two video images from the video, performs contribution adjustment on a spatial feature of a video image feature extracted from the at least target video images, fuses, through priori information obtained based on change information of an intermediate image feature obtained by the contribution adjustment in a temporal dimension, a temporal feature of the intermediate image feature and a cohesive feature obtained by performing attention processing on the temporal feature, performs temporal feature contribution adjustment on the obtained fused feature, and performs video behavior recognition based on the obtained behavior recognition feature. The server 104 may feed an obtained video behavior recognition result back to the terminal 102.

In some embodiments, the video behavior recognition method may also be independently performed by the server 104. For example, the server 104 may acquire at least two video images from a database, and performs video behavior recognition processing based on the obtained at least two video images. In some embodiments, the video behavior recognition method may also be performed by the terminal 102. Specifically, after the terminal 102 shoots the video, the terminal 102 extracts at least two video images from the shot video, and performs video behavior recognition processing based on the at least two video images.

The terminal 102 may be, but is not limited to, various personal computers, laptops, smartphones, tablet computers, vehicle-mounted devices, and portable wearable devices. The server 104 may be implemented by using an independent server or a server cluster including multiple servers.

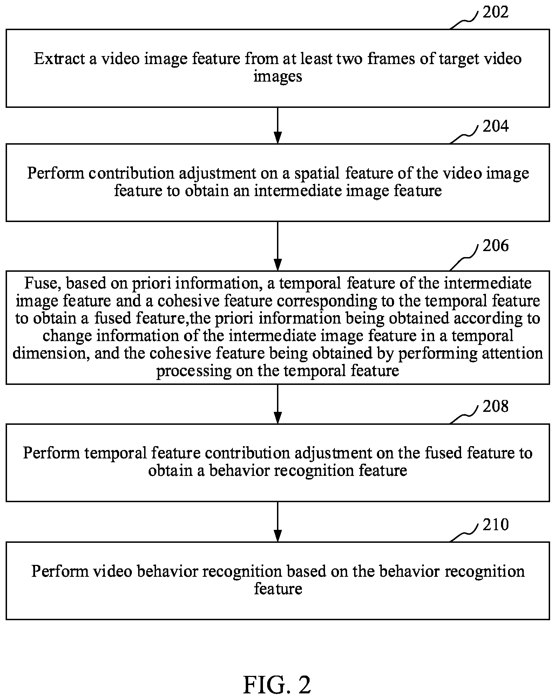

In one embodiment, as shown in FIG. 2, a video behavior recognition method is provided, which is described by taking an example in which the method is applied to the server 104 in FIG. 1, and includes the following steps 202 to 210.

In step 202, a video image feature is extracted from at least two video images.

The target video images are images in the video that needs to be subjected to behavior recognition processing, which may specifically be extracted from the video that needs to be subjected to behavior recognition processing. For example, for the video that needs to be subjected to be behavior recognition processing, for example, a basketball sport video shot by the terminal 102, the target video image may be an image extracted from the basketball sport video. There is more than one target video image, so that behavior recognition processing is performed on the video according to temporal information between images. Generally, in video behavior recognition, behavior recognition of some actions, such as drinking and eating, can be realized only according to spatial information without temporal information, that is, without an association relationship among multiple images. For some more detailed behavior recognition, the behavior recognition of the video is realized based on the association relationship among the images, that is, by using the temporal information reflected by the multiple images. For example, behaviors of shooting a basketball downwards and catching a basketball upwards in playing basketball need to be comprehensively recognized based on multiple images. In a specific application, the target video image may include multiple images continuously extracted from the video, for example, may include 5, 10 continuous images, or the like.

The video image feature includes at least spatial feature and temporal feature. The video image feature is obtained by performing feature extraction on the target video image, and is used for reflecting the image feature of the target video image. The video image feature may be an image feature extracted in various image feature extraction modes, for example, may be the image feature extracted by performing feature extraction on each target video image through an artificial neural network.

Specifically, the server 104 acquires at least two video images. The target video images are extracted from the video shot by the terminal 102. The target video images may include multiple images continuously extracted from the video. The server 104 extracts a video image feature from the at least two video images. Specifically, the server 104 may respectively perform image feature extraction on the at least two video images, for example, respectively inputting the at least two video images into the artificial neural network, to obtain video image features respectively corresponding to the at least two video images.

In step 204, contribution adjustment is performed on a spatial feature of the video image feature to obtain an intermediate image feature.

The spatial feature is used for reflecting spatial information of the target video image. The spatial information may include pixel value distribution information of each pixel in the target video image, that is, features of the target video image. The spatial feature may characterize a static feature of an object included in the target video image. The spatial feature may be further extracted from the video image feature, so as to acquire, from the video image feature, the feature that reflects the spatial information in the target video image. During specific implementation, feature extraction may be performed on the video image feature in a spatial dimension, so as to obtain the spatial feature of the video image feature. The contribution adjustment is used for adjusting a contribution degree of the spatial feature. The contribution degree of the spatial feature refers to a degree of influence of the spatial feature on the behavior recognition result when the video behavior recognition is performed based on the feature of the target video image. The greater the contribution degree of the spatial feature, the greater the influence of the spatial feature on the video behavior recognition processing, that is, a result of the video behavior recognition is closer to the behavior reflected by the spatial feature. The contribution adjustment may specifically be realized by adjusting the spatial feature based on a preset weight parameter, to obtain an intermediate image feature. Specifically, the contribution adjustment may be performed by adjusting a weight of the spatial feature in the features for video behavior recognition. The intermediate image feature is an image feature obtained after adjusting the contribution degree of the spatial feature of the video image feature in video behavior recognition.

Specifically, after obtaining the video image feature, the server 104 performs contribution adjustment on the spatial feature of the video image feature corresponding to each target video image. Specifically, the server 104 may perform spatial feature extraction on each video image feature to obtain the spatial feature of each video image feature. The server 104 performs contribution adjustment on the spatial feature of the video image feature based on a spatial weight parameter to obtain an intermediate image feature. The spatial weight parameter may be preset, and specifically, may be obtained in advance by training a video image sample carrying a behavior label.

In step206, a temporal feature of the intermediate image feature and a cohesive feature corresponding to the temporal feature are fused based on priori information, to obtain a fused feature, the priori information is obtained based on change information of the intermediate image feature in a temporal dimension, and the cohesive feature is obtained by performing attention processing on the temporal feature.

The priori information reflects a priori knowledge of the target video image in the temporal dimension. The priori information is obtained based on the change information of the intermediate image feature in the temporal dimension, and specifically, may be obtained based on a similarity of intermediate image features in the temporal dimension. For example, the priori information may include a weight parameter for each fused feature when feature fusion is performed, and the similarity of the intermediate image features corresponding to each target video image in the temporal dimension may be calculated, and the priori information including the weight parameter may be obtained based on the obtained similarity. The temporal feature may reflect temporal information of the target video image in the video. The temporal information may include association information among the target video images in the video, that is, a characteristic of a temporal order of the target video image in the video. The temporal feature may characterize a dynamic feature of an object included in the target video image, to realize dynamic behavior recognition of the object. The temporal feature may be further extracted from the intermediate image feature, to acquire, from the intermediate image feature, the feature that reflects the temporal information in the target video image. During specific implementation, feature extraction may be performed on the intermediate image feature in a temporal dimension, to obtain the temporal feature of the intermediate image feature. The cohesive feature corresponding to the temporal feature is obtained by performing attention processing on the temporal feature. The attention processing refers to paying attention to a feature which is beneficial for the video behavior recognition of the temporal feature to highlight this feature, to obtain a cohesive feature with low redundancy and strong cohesion. Specifically, the attention processing may be performed on the temporal feature of the intermediate image feature based on an attention mechanism algorithm to obtain the cohesive feature corresponding to the temporal feature. The cohesive feature is obtained by performing attention processing on the temporal feature, and has high cohesive. That is, the temporal information of the cohesive feature has a highlighted focal feature, low feature redundancy, and high feature validity, can accurately express the information of the target video image in the temporal dimension, and is beneficial to improve the accuracy of the video behavior recognition.

The temporal feature of the intermediate image feature and the cohesive feature corresponding to the temporal feature are fused through the priori information, to fuse the temporal feature and the cohesive feature according to the priori knowledge in the priori information to obtain the fused feature. The fused feature is obtained by fusing the temporal feature and the cohesive feature based on the priori knowledge in the priori information, which can ensure the cohesion of the temporal information in the fused feature and enhance the expression of an important feature in the temporal dimension, so that the accuracy of the video behavior recognition can be improved. During specific implementation, the priori information may include a weight parameter for each fused feature when feature fusion is performed, that is, the priori information includes weight parameters respectively for the temporal feature and the cohesive feature corresponding to the temporal feature. Weighting and fusion are performed on the temporal feature and the cohesive feature corresponding to the temporal feature based on the weight parameters to obtain the fused feature.

Specifically, after obtaining the intermediate image feature, the server 104 may acquire the priori information. The priori information is obtained based on the change information of the intermediate image feature in the temporal dimension, and specifically, may be obtained based on a cosine similarity of the intermediate image features in the temporal dimension. The server 104 fuses, based on the priori information, the temporal feature of the intermediate image feature and the cohesive feature corresponding to the temporal feature. Specifically, the server 104 may perform feature extraction on the intermediate image feature in the temporal dimension to obtain the temporal feature of the intermediate image feature, and further determine the cohesive feature corresponding to the temporal feature. The cohesive feature corresponding to the temporal feature is obtained by performing attention processing on the temporal feature. Specifically, the server 104 may perform the attention processing on the temporal feature based on an attention mechanism algorithm to obtain the cohesive feature corresponding to the temporal feature. The server 104 fuses the temporal feature of the intermediate image feature and the cohesive feature corresponding to the temporal feature according to the priori information. For example, the server 104 may perform weighting and fusion on the temporal feature of an image feature and the cohesive feature corresponding to the temporal feature according to the weight parameters in the priori information to obtain the fused feature.

In step 208, temporal feature contribution adjustment is performed on the fused feature to obtain a behavior recognition feature.

The temporal feature contribution adjustment is used for adjusting the contribution degree of the fused feature in the temporal dimension. The contribution degree of the temporal feature refers to a degree of influence of a feature in the temporal dimension of the fused feature on the behavior recognition result when the video behavior recognition is performed based on the feature of the target video image. The greater the contribution degree of the feature of the fused feature in the temporal dimension, the greater the influence of the feature of the fused feature in the temporal dimension on the video behavior recognition processing, that is, a result of the video behavior recognition is closer to the behavior reflected by the feature of the fused feature in the temporal dimension. The temporal feature contribution adjustment may specifically be realized by adjusting the feature in the temporal dimension of the fused feature through a preset weight parameter, to obtain a behavior recognition feature. Specifically, the temporal feature contribution adjustment may be performed by adjusting a weight of the temporal feature in the features for video behavior recognition. The behavior recognition feature may be used for video behavior recognition.

Specifically, after obtaining the fused feature, the server 104 performs temporal feature contribution adjustment on the fused feature. Specifically, the server 104 performs contribution adjustment on the fused feature in the temporal dimension according to a temporal weight parameter, to adjust the contribution degree of the fused feature in the temporal dimension to obtain a behavior recognition feature. The temporal weight parameter may be preset, and specifically, may be obtained in advance by training a video image sample carrying a behavior label.

In step 210, video behavior recognition is performed based on the behavior recognition feature.

The behavior recognition feature is used for video behavior recognition, and specifically, may classify behaviors based on the behavior recognition feature, to determine a video behavior recognition result corresponding to the target video image. Specifically, the server 104 may perform video behavior recognition based on the obtained behavior recognition feature, for example, may input the behavior recognition feature into a classifier for classification, and obtain the video behavior recognition result according to a classification result, so as to realize effective recognition of a video behavior.

In the above video behavior recognition method, contribution adjustment is performed on the spatial feature of the video image feature extracted from the at least two video images, the temporal feature of the intermediate image feature and the cohesive feature obtained by performing attention processing on the temporal feature are fused according to the priori information obtained based on the change information of the intermediate image feature obtained according to the contribution adjustment in the temporal dimension, temporal feature contribution adjustment is performed on the obtained fused feature, and the video behavior recognition is performed based on the obtained behavior recognition feature. During video behavior recognition processing, contribution adjustment is performed on the spatial feature of the video image feature, and temporal feature contribution adjustment is performed on the fused feature, so that the contribution degree of the temporal information and the spatial information in the behavior recognition feature can be adjusted, which can enhance behavior information expressiveness of the behavior recognition feature. The temporal feature of the intermediate image feature and the cohesive feature obtained by performing attention processing on the temporal feature are fused through the priori information obtained based on the change information of the intermediate image feature obtained according to the contribution adjustment in the temporal dimension, and the temporal information of the behavior recognition feature may be effectively focused, so that the obtained behavior recognition feature can effectively reflect the behavior information in the video, thereby improving the accuracy of the video behavior recognition.

In one embodiment, the operation of performing contribution adjustment on the spatial feature of the video image feature to obtain the intermediate image feature includes: performing spatial feature extraction on the video image feature to obtain the spatial feature of the video image feature; and performing contribution adjustment on the spatial feature through a spatial structural parameter of a structural parameter to obtain the intermediate image feature, the structural parameter being obtained by training a video image sample carrying a behavior label.

The spatial feature extraction is used for extracting a spatial feature from the video image feature, to perform contribution adjustment on the spatial feature. The spatial feature extraction may be implemented through a feature extraction module. For example, a convolution operation may be performed on the video image feature through a convolution module in a convolutional neural network model, to realize the spatial feature extraction. The structural parameter may include a weight parameter, to perform weighted adjustment on various operations for the image feature. For example, for the convolutional neural network, the structural parameter may be a weight parameter of each operation defined in operating space of the convolutional neural network, and specifically, for example, may be a weight parameter for performing weighted adjustment on the operations such as convolution, sampling, and pooling. The structural parameter may include a spatial structural parameter and a temporal structural parameter, which are respectively used for performing contribution adjustment on the spatial feature in the spatial dimension and the temporal feature in the temporal dimension, to adjust spatial-temporal information of the video image feature to enhance the behavior information expressiveness of the behavior recognition feature, which is beneficial to improving the accuracy of the video behavior recognition. The structural parameter may be obtained by training a video image sample carrying a behavior label. The video image sample may be a video image carrying a behavior label. The structural parameter may be obtained by training based on the video image sample, so as to perform effective weighted adjustment on various operations.

Specifically, after obtaining the video image feature, the server 104 performs spatial feature extraction on the video image feature corresponding to each target video image. Specifically, the spatial feature extraction may be performed on the video image feature through a pre-trained video behavior recognition model. For example, the spatial feature extraction may be performed on the video image feature through a convolutional layer structure in the video behavior recognition model to obtain the spatial feature of the video image feature. The server 104 determines the structural parameter obtained by training the video image sample carrying the behavior label, and performs contribution adjustment on the spatial feature through the spatial structural parameter of the structural parameter. For example, when the spatial structural parameter is a weight parameter, weighting may be performed on the spatial feature through the weight parameter corresponding to the spatial structural parameter to adjust the influence of the spatial feature of the video image feature on a recognition result during video behavior recognition through the spatial structural parameter, to realize the contribution adjustment to the spatial feature, and to acquire the intermediate image feature. The intermediate image feature is an image feature obtained after adjusting the contribution degree of the spatial feature of the video image feature in video behavior recognition.

Further, the operation of performing temporal feature contribution adjustment on the fused feature to obtain a behavior recognition feature includes: performing contribution adjustment on the fused feature based on the temporal structural parameter of the structural parameter to obtain the behavior recognition feature.

The structural parameter may be a weight parameter of each operation defined in operating space of the convolutional neural network, and the structural parameter includes the temporal structural parameter for performing contribution adjustment on the feature in the temporal dimension. Specifically, after obtaining the fused feature, the server 104 performs temporal feature contribution adjustment on the fused feature based on the temporal structural parameter of the structural parameter to obtain a behavior recognition feature for video behavior processing. During implementation, the temporal structural parameter may be a weight parameter, and the server 104 may perform weighting on the fused feature through the weight parameter corresponding to the temporal structural parameter to adjust, through the temporal structural parameter, the influence of the feature of the fused feature in the temporal dimension on a recognition result during video behavior recognition based on the fused feature, to realize the contribution adjustment to the feature in the temporal dimension to adjust the contribution degree of the fused feature in the temporal dimension to obtain the behavior recognition feature. The server 104 may perform video behavior recognition processing based on the obtained behavior recognition feature to obtain the video behavior recognition result.

In this embodiment, contribution adjustment is performed on the spatial feature of the video image feature and the fused feature in corresponding feature dimensions based on the spatial structural parameter and the temporal structural parameter of the structural parameter obtained by training the video image sample carrying the behavior label, to adjust the contribution degree of the temporal information and the spatial information in the behavior recognition feature according to the spatial structural parameter and the temporal structural parameter, and realize the effective entanglement of the spatial-temporal feature. Therefore, the expressiveness of the spatial-temporal feature of the behavior recognition feature is strong, that is, the behavior information expressiveness of the behavior recognition feature is enhanced, and the accuracy of the video behavior recognition is improved.

In one embodiment, the video behavior recognition method further includes: determining a to-be-trained structural parameter; performing contribution adjustment on a spatial sample feature of a video image sample feature based on the spatial structural parameter of the to-be-trained structural parameter to obtain an intermediate sample feature, the video image sample feature being extracted from the video image sample; fusing, based on priori sample information, a temporal sample feature of the intermediate sample feature and a cohesive sample feature corresponding to the temporal sample feature to obtain a fused sample feature, the cohesive sample feature being obtained by performing attention processing on the temporal sample feature, and the priori sample information being obtained according to change information of the intermediate sample feature in a temporal dimension; performing contribution adjustment on the fused sample feature based on the temporal structural parameter of the to-be-trained structural parameter to obtain the behavior recognition sample feature; and performing video behavior recognition based on the behavior recognition sample feature, updating the to-be-trained structural parameter according to the behavior recognition result and the behavior label corresponding to the video image sample, and performing training continually until the training is ended to obtain the structural parameter.

In this embodiment, training is performed based on the video image sample carrying the behavior label, and the structural parameter including the temporal structural parameter and the spatial structural parameter are obtained at the end of the training. The to-be-trained structural parameter may be an initial value in each round of iterative training. Contribution adjustment is performed on the spatial sample feature of the video image sample feature based on the spatial structural parameter of the to-be-trained structural parameter to obtain the intermediate sample feature. The intermediate sample feature represents a result of performing contribution adjustment on the spatial sample feature of the video image sample feature. The video image sample feature is extracted from a video image sample, and specifically, feature extraction may be performed on the video image sample through an artificial neural network to obtain the video image sample feature of the video image sample. The priori sample information is obtained according to change information the intermediate sample feature in the temporal dimension, and specifically, may be obtained according to a similarity of the intermediate sample features in the temporal dimension. The cohesive sample feature is obtained by performing attention processing on the temporal sample feature, and specifically, the attention processing may be performed on the temporal sample feature based on an attention mechanism to obtain the cohesive sample feature corresponding to the temporal sample feature.

The fused sample feature is obtained by fusing, according to the priori sample information, the temporal sample feature of the intermediate sample feature and the cohesive sample feature corresponding to the temporal sample feature, and specifically, weighting and fusion may be performed, based on the priori sample information, on the temporal sample feature of the intermediate sample feature and the cohesive sample feature corresponding to the temporal sample feature to obtain the fused sample feature. The behavior recognition sample feature is used for video behavior recognition processing, and is obtained by performing contribution adjustment on the fused sample feature through the temporal structural parameter of the to-be-trained structural parameter. Specifically, weight adjustment is performed on the fused sample feature based on the temporal structural parameter, to adjust the contribution degree of the feature of the fused sample feature in the temporal dimension during the video behavior recognition. The behavior recognition result is obtained by performing video behavior recognition based on the behavior recognition sample feature. The to-be-trained structural parameter may be evaluated according to the behavior recognition result and the behavior label correspondingly carried by the video image sample, and after the to-be-trained structural parameter is updated according to an evaluation result, iterative training is continued until the training is ended. If the training number of times reaches a preset threshold of the training number of times, the behavior recognition result meets a recognition accuracy requirement, a target function satisfies an ending condition, and the like, a trained structural parameter is obtained after the training is ended. Contribution adjustment may be performed on each of the spatial feature of the video image feature and the fused feature based on the trained structural parameter, to realize video behavior recognition processing.

Specifically, the structural parameter may be trained by the server 104, or may also be migrated to the server 104 after being trained by other training devices. Taking the server 104 training a structural parameter as an example, when the structural parameter is trained, the server 104 determines the to-be-trained structural parameter. The to-be-trained structural parameter is an initial value of a current iterative training. The server 104 performs contribution adjustment on the spatial sample feature of the video image sample feature through the spatial structural parameter of the to-be-trained structural parameter to obtain the intermediate sample feature. Further, the server 104 fuses, based on the priori sample information, the temporal sample feature of the intermediate sample feature and the cohesive sample feature corresponding to the intermediate sample feature to obtain a fused sample feature. After obtaining the fused sample feature, the server 104 performs contribution adjustment on the fused sample feature through the temporal structural parameter of the to-be-trained structural parameter to obtain a behavior recognition sample feature. The server 104 performs video behavior recognition based on the behavior recognition sample feature to obtain a behavior recognition result. The server 104 updates the to-be-trained structural parameter based on the behavior recognition result and the behavior label corresponding to the video image sample, returns to continue performing iterative training through the updated to-be-trained structural parameter, and ends the training to obtain a structural parameter until a training ending condition is satisfied. The structural parameter may be used for performing weighted adjustment on various operations for the feature in a spatial-temporal dimension of the target video image during the video behavior recognition, so as to realize effective entanglement of a spatial-temporal feature of the target video image to enhance the behavior information expressiveness of the behavior recognition feature, thereby improving the accuracy of the video behavior recognition.

In this embodiment, the structural parameter is trained through a behavior label-containing video image sample, and effective entanglement of the spatial-temporal feature of the target video image may be realized through the trained structural parameter, which can enhance the behavior information expressiveness of the behavior recognition feature, thereby improving the accuracy of the video behavior recognition.

In one embodiment, the video behavior recognition method is implemented through a video behavior recognition model, and the to-be-trained structural parameter is a parameter of the video behavior recognition model during training. The operations of updating the to-be-trained structural parameter according to the behavior recognition result and the behavior label corresponding to the video image sample, and performing training continually until the training is ended to obtain the structural parameter include: obtaining a behavior recognition result outputted from the video behavior recognition model; determining a difference between the behavior recognition result and the behavior label corresponding to the video image sample; updating a model parameter of the video behavior recognition model and the to-be-trained structural parameter according to the difference; and performing training continually based on the updated video behavior recognition model until the training is ended, and obtaining the structural parameter according to the trained video behavior recognition model.

In this embodiment, the video behavior recognition method is implemented through the video behavior recognition model, that is, steps of the video behavior recognition method are performed by the pre-trained video behavior recognition model. The video behavior recognition model may be artificial neural network models constructed based on various neural network algorithms, such as a convolutional neural network model, a deep learning network model, cyclic neural network model, a perceptron network model, a generative adversarial network model, and the like. The to-be-trained structural parameter is a parameter of the video behavior recognition model during training, that is, the structural parameter is a parameter for performing contribution adjustment on model operation processing in the video behavior recognition model.

The behavior recognition result is a recognition result obtained by performing video behavior recognition based on the behavior recognition sample feature. The behavior recognition result is specifically outputted from the video behavior recognition model, that is, at least two video images are inputted into the video behavior recognition model, so that the video behavior recognition model performs video behavior recognition based on the target video images, and outputs the behavior recognition result. A difference between the behavior recognition result and a behavior label corresponding to the video image sample may be determined by comparing the behavior recognition result and the behavior label. The model parameter refers to a parameter corresponding to each layer of a network structure in the video behavior recognition model. For example, for the convolutional neural network model, the model parameter may include, but is not limited to, various parameters such as a convolutional kernel parameter of each layer of convolution, a pooling parameter, an up-sampling parameter, and a down-sampling parameter. The model parameter of the video behavior recognition model and the to-be-trained structural parameter are updated according to the difference between the behavior recognition result and the behavior label, so as to perform joint training on the model parameter of the behavior recognition model and the to-be-trained structural parameter. When the trained video behavior recognition model is obtained at the end of the training, the structural parameter may be determined according to the trained video behavior recognition model.

The server 104 performs joint training on the model parameter and the structural parameter through the behavior recognition model, and the trained structural parameter may be determined from the trained video behavior recognition model. Specifically, after the server 104 inputs the video image sample into the video behavior recognition model, the video behavior recognition model performs video behavior recognition processing and outputs a behavior recognition result. The server 104 determines a difference between the behavior recognition result outputted from the video behavior recognition model and the behavior label corresponding to the video image sample, and updates a parameter of the video behavior recognition model according to the difference, specifically including updating the model parameter of the video behavior recognition model and the to-be-trained structural parameter, to obtain an updated video behavior recognition model. The server 104 performs training continually based on the video image sample on the updated video behavior recognition model until the training is ended, for example, the training is ended when a training condition is satisfied, so as to obtain the trained video behavior recognition model. The server 104 may determine a trained structural parameter according to the trained video behavior recognition model. Weighted adjustment may be performed on the operation of each layer of a network structure in the video behavior recognition model based on the trained structural parameter, to adjust the contribution degree of each layer of a network structure to the video behavior recognition processing to obtain an expressive feature for video behavior recognition, and the accuracy of the video behavior recognition is improved.

In this embodiment, joint training is performed on the model parameter and the structural parameter by the video behavior recognition model, the trained structural parameter may be determined from the trained video behavior recognition model, and effective entanglement of the spatial-temporal feature of the target video image may be realized based on the trained structural parameter, which can enhance the behavior information expressiveness of the behavior recognition feature, thereby improving the accuracy of the video behavior recognition.

In one embodiment, the operations of updating the to-be-trained structural parameter according to the behavior recognition result and the behavior label corresponding to the video image sample, and performing training continually until the training is ended to obtain the structural parameter include: determining a behavior recognition loss between the behavior recognition result and the behavior label corresponding to the video image sample; obtaining a reward according to the behavior recognition loss and a previous behavior recognition loss; updating the to-be-trained structural parameter according to the reward, and performing training continually based on the updated to-be-trained structural parameter to obtain the structural parameter until a target function satisfies an ending condition, the target function being obtained based on each reward in a training process.

The behavior recognition loss is used for characterizing a difference degree between the behavior recognition result and the behavior label corresponding to the video image sample, and the form of the behavior recognition loss may be set according to actual needs, for example, may be set as a cross entropy loss. A previous behavior recognition loss is the behavior recognition loss determined for a previous video image sample. The reward is used for updating the to-be-trained structural parameter. The reward is determined according to the behavior recognition loss and the previous behavior recognition loss. The to-be-trained structural parameter may be guided to be updated based on the reward for meeting a training requirement. After the to-be-trained structural parameter is updated, and training is continued based on the updated to-be-trained structural parameter to obtain the structural parameter until the target function satisfies the ending condition, the target function is obtained based on each reward in the training processing, that is, the target function is obtained according to the reward corresponding to each video image sample, and specifically, the target function may be constructed according to a sum of rewards corresponding to various video image samples, so as to determine the end of the training of the structural parameter according to the target function to obtain the structural parameter meeting a contribution adjustment requirement.

Specifically, after the server 104 performs video behavior recognition based on the behavior recognition sample feature to obtain the behavior recognition result, the server 104 determines the behavior recognition loss between the behavior recognition result and the behavior label corresponding to the video image sample, and specifically, the behavior recognition loss may be obtained according to the cross entropy loss between the behavior recognition result and the behavior label. The server 104 obtains the reward based on the obtained behavior recognition loss and the previous behavior recognition loss corresponding to the previous video image sample, and specifically, may determine the reward according to a difference between the behavior recognition loss and the previous behavior recognition loss. For example, if the behavior recognition loss is greater than the previous behavior recognition loss, a positive reward may be obtained, to provide positive feedback; if the behavior recognition loss is less than the previous behavior recognition loss, a negative reward may be obtained, to provide negative feedback, to guide the updating of the to-be-trained structural parameter. The server 104 updates, according to the reward, the to-be-trained structural parameter, for example, updating the to-be-trained structural parameter according to a positive or negative value or a numerical magnitude of the reward to obtain an updated to-be-trained structural parameter. The server 104 performs training continually the updated to-be-trained structural parameter, and ends the training to obtain a structural parameter until a training ending condition is satisfied. The target function is obtained based on each reward in the training process, specifically, the target function may be constructed according to a sum of reward values corresponding to various video image samples, and the end of the training of the structural parameter may be determined according to the target function, for example, the training is ended when the target function reaches an extremum value to obtain the structural parameter meeting a contribution adjustment requirement.

In this embodiment, the reward is obtained according to the difference between behavior recognition losses corresponding to various video image samples. The behavior recognition loss is determined according to the behavior recognition result and the behavior label corresponding to the video image sample, the to-be-trained structural parameter is updated based on the reward, training is continued, and the training is ended until the target function obtained according to the reward corresponding to each video image sample to obtain a trained structural parameter. The to-be-trained structural parameter is updated according to the reward obtained according to the difference between the behavior recognition losses corresponding to various video image samples, which can improve the training efficiency of the to-be-trained structural parameter.

In one embodiment, the operation of updating the to-be-trained structural parameter according to the reward includes: updating the model parameter of a policy gradient network model according to the reward; and updating the to-be-trained structural parameter by the updated policy gradient network model.

The policy gradient network model is a policy gradient-based network model, and an input thereof is a state, and an output thereof is an action. The policy is that different actions are taken in different states, and gradient descent is performed based on the policy to train the policy gradient network model to be capable of taking corresponding actions according to the current state to obtain a higher reward. Specifically, the model parameter of the policy gradient network model may be taken as a state, and an output structural parameter of the policy gradient network model based on an input structural parameter are taken as actions, so that the policy gradient network model may predict and output a next action according to the input structural parameter and the output structural parameter, that is, the next structural parameter, thereby updating the structural parameter during training.

Specifically, when the to-be-trained structural parameter is updated according to the reward, the server 104 updates the model parameter of the policy gradient network model according to the reward, and specifically, adjusts each model parameter in the policy gradient network model based on the reward, so that the updated policy gradient network model performs next structural parameter prediction. After the policy gradient network model is updated, the server 104 updates the to-be-trained structural parameter through the updated policy gradient network model. Specifically, structural parameter prediction may be performed by the updated policy gradient network model based on an updated network state and the to-be-trained structural parameter to obtain a predicted structural parameter. The structural parameter predicted by the policy gradient network model is the structural parameter obtained by updating the to-be-trained structural parameter.

In this embodiment, the policy gradient network model is updated according to the reward, the to-be-trained structural parameter is updated by the updated policy gradient network model, and the structural parameter may be optimized in a policy gradient mode, which can ensure the training quality of the structural parameter, and is beneficial to improve the accuracy of the video behavior recognition processing.

In one embodiment, the operation of updating the to-be-trained structural parameter based on the updated policy gradient network model includes: performing, by the updated policy gradient network model, structural parameter prediction based on the updated model parameter and the to-be-trained structural parameter to obtain a predicted structural parameter; and obtaining, according to the predicted structural parameter, the structural parameter by updating the to-be-trained structural parameter.

The updated policy gradient network model is obtained by updating the model parameter of the policy gradient network model, that is, the updated policy gradient network model is obtained by adjusting and updating the model parameter of the policy gradient network model based on the reward.

Specifically, after the updated policy gradient network model is updated to obtain the updated policy gradient network model, the server takes the model parameter of the updated policy gradient network model as a state, and predicts the structural parameter in this state. Specifically, structural parameter prediction is performed based on the updated model parameter and the to-be-trained structural parameter to the predicted structural parameter. In a specific application, the server performs structural parameter prediction based on the to-be-trained structural parameter in a current network state of the updated policy gradient network model to obtain the predicted structural parameter. The server updates a structural parameter according to the predicted structural parameter to obtain the structural parameter after the to-be-trained structural parameter is updated. For example, the server may directly take the predicted structural parameter outputted by the updated policy gradient network model through structural parameter prediction as the structural parameter after the to-be-trained structural parameter is updated, so as to update the to-be-trained structural parameter.

In this embodiment, the server performs structural parameter prediction on the to-be-trained structural parameter by the updated policy gradient network model, obtains, according to the predicted structural parameter, the structural parameter after the to-be-trained structural parameter is updated, and may optimize the structural parameter in a policy gradient mode, which can ensure the training quality of the structural parameter, and is beneficial to improve the accuracy of the video behavior recognition processing.

In one embodiment, the video behavior recognition method further includes: determining a similarity of intermediate image features in a temporal dimension; and correcting initial priori information based on the similarity to obtain the priori information.

The temporal dimension is a dimension of an order of all target video images in a video, and accurate recognition of a video behavior may be assisted according to a temporal feature of the temporal dimension. The similarity may characterize a distance between features. The higher the similarity, the closer the distance. The change degree of the intermediate image feature in the temporal dimension may be reflected through the similarity of the intermediate image features in the temporal dimension. The initial priori information may be pre-set priori information, and specifically, may be the priori information obtained by training based on sample data. The initial priori information is corrected according to the similarity, so that weighted adjustment may be performed on the temporal feature of the intermediate image feature and a cohesive feature according to the change degree of each target video image in the temporal dimension, so as to enhance the cohesion of a fused feature, that is, to highlight a focal feature of the fused feature, and reduce redundant information of the fused feature.

Specifically, the server 104 may correct the initial priori information according to the change degree of each target video image in the temporal dimension before the temporal feature of the intermediate image feature and the cohesive feature corresponding to the temporal feature are fused based on the priori information, to obtain corresponding priori information. The server 104 determines the similarity of the intermediate image features in the temporal dimension, specifically, may calculate a cosine similarity of the intermediate image features corresponding to each target video image in the temporal dimension, and measure the change degree of each target video image in the temporal dimension based on the cosine similarity. The server 104 corrects the initial priori information according to the similarity of the intermediate image features in the temporal dimension. Specifically, the initial priori information may be divided into positive and negative parameters based on the similarity. After the initial priori information is corrected through the positive and negative parameters, the corrected initial priori information and the initial priori information are combined in a residual connection mode to obtain priori information, thereby determining the priori information.

In this embodiment, the initial priori information is corrected according to the similarity of the intermediate image features in the temporal dimension, and the initial priori information is corrected through the similarity that reflects the change degree of each target video image in the temporal dimension, which can effectively obtain a corresponding priori knowledge by effectively using the change degree of each target video image in the temporal dimension, to fuse the temporal feature and the cohesive feature based on the priori knowledge. The temporal information in a behavior recognition feature can be effectively focused, so that the obtained behavior recognition feature can effectively reflect behavior information in a video, thereby improving the accuracy of video behavior recognition.

In one embodiment, the initial priori information includes a first initial priori parameter and a second initial priori parameter. The operation of correcting initial priori information based on the similarity to obtain the priori information includes: dynamically adjusting the similarity according to the first initial priori parameter, the second initial priori parameter, and a preset threshold; correcting the first initial priori parameter and the second initial priori parameter through the dynamically adjusted similarity to obtain a first priori parameter and a second priori parameter; and obtaining the priori information according to the first priori parameter and the second priori parameter.

The initial priori information includes the first initial priori parameter and the second initial priori parameter. The first initial priori parameter and the second initial priori parameter are respectively used as fusion weight parameters of the temporal feature of the intermediate image feature and the cohesive feature. The preset threshold may be dynamically set according to actual needs, to dynamically correct the priori information according to the actual needs. The first initial priori parameter and the second initial priori parameter are respectively used as the fusion weight parameters of the temporal feature of the intermediate image feature and the cohesive feature. The priori information includes the first initial priori parameter and the second initial priori parameter.

Specifically, when the initial priori information is corrected, the server 104 determines the preset threshold, and dynamically adjusts the similarity according to the first initial priori parameter, the second initial priori parameter, and the preset threshold. The server 104 respectively corrects the first initial priori parameter and the second initial priori parameter in the initial priori information based on the dynamically adjusted similarity to obtain a first priori parameter and a second priori parameter, and obtains priori information according to the first priori parameter and the second priori parameter. Weighting and fusion may be performed on the temporal feature and the cohesive feature based on the priori information, to fuse the temporal feature and the cohesive feature according to the priori knowledge in the priori information to obtain a fused feature. The fused feature is obtained by fusing the temporal feature and the cohesive feature based on the priori knowledge in the priori information, which can ensure the cohesion of the temporal information in the fused feature and enhance the expression of an important feature in the temporal dimension, thereby improving the accuracy of the video behavior recognition.

In this embodiment, after the similarity is dynamically adjusted according to the initial priori information and the preset threshold, the first initial priori parameter and the second initial priori parameter are corrected based on the dynamically adjusted similarity to obtain the first priori parameter and the second priori parameter, and the priori information is obtained according to the first priori parameter and the second priori parameter. The obtained priori information reflects a priori knowledge of the target video image in the temporal dimension. The temporal feature and the cohesive feature are fused based on the priori information, which can effectively focus the temporal information in the behavior recognition feature, so that the obtained behavior recognition feature can effectively reflect behavior information in a video, thereby improving the accuracy of video behavior recognition.

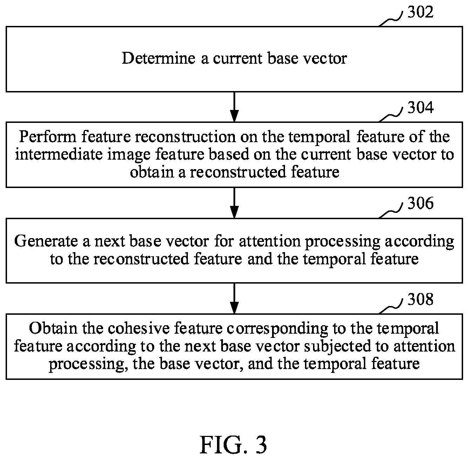

In one embodiment, as shown in FIG. 3, the video behavior recognition method further includes: performing cohesive processing on the temporal feature to obtain corresponding cohesive feature processing, which specifically includes the following step 302 to 308.

In step 302, a current base vector is determined.

The current base vector is a base vector for currently performing cohesive processing on the temporal feature, and the cohesive feature processing on the temporal feature may also be realized through the base vector. Specifically, when the cohesive processing is performed on the temporal feature, the server 104 determines the current base vector, which, for example, may be B×C×K, where B is a data size in batch processing, C is a number of channels of the intermediate image feature, and K is a dimension of the base vector.

In step 304, feature reconstruction is performed on the temporal feature of the intermediate image feature based on the current base vector to obtain a reconstructed feature.

Feature reconstruction is performed on the temporal feature based on the current base vector. Specifically, the reconstructed feature may be obtained by fusing the current base vector and the temporal feature of the intermediate image feature. During specific implementation, the server 104 realizes the reconstruction of the temporal feature by performing matrix multiplication and normalized mapping on the current base vector and the temporal feature of the intermediate image feature to obtain the reconstructed feature.

In step306, a next base vector for attention processing is generated according to the reconstructed feature and the temporal feature.

The next base vector for attention processing is a base vector when attention processing is performed next time, that is, when cohesive processing is performed on the temporal feature next time. Specifically, the server 104 generates a next base vector for attention processing according to the reconstructed feature and the temporal feature, for example, the next base vector for attention processing may be obtained by performing matrix multiplication on the reconstructed feature and the temporal feature. The next base vector for attention processing will be taken as the base vector for attention processing next time to perform feature reconstruction on the corresponding temporal feature.

In step308, the cohesive feature corresponding to the temporal feature is obtained according to the next base vector for attention processing, the base vector, and the temporal feature.

After obtaining the next base vector for attention processing, the server 104 obtains the cohesive feature corresponding to the temporal feature according to the next base vector for attention processing, the base vector, and the temporal feature, to realize cohesive processing on the temporal feature. Specifically, the cohesive feature corresponding to the temporal feature may be generated after the next base vector for attention processing, the base vector, and the temporal feature are fused.

In this embodiment, feature reconstruction is performed on the temporal feature of the intermediate image feature based on the base vector, a new base vector is generated according to the reconstructed feature and the temporal feature, and the cohesive feature corresponding to the temporal feature is obtained according to the new base vector, an old base vector, and the temporal feature, to focus the temporal feature to highlight an important feature in the temporal dimension and obtain the cohesive feature with high cohesion, which can accurately express the information of the target video image in the temporal dimension and is beneficial to improve the accuracy of video behavior recognition.

In one embodiment, the operation of generating the next base vector for attention processing according to the reconstructed feature and the temporal feature includes: fusing the reconstructed feature and the temporal feature to generate an attention feature; performing regularization on the attention feature to obtain a regularized feature; and performing moving average updating on the regularized feature to generate the next base vector for attention processing.

The attention feature is obtained by fusing the reconstructed feature and the temporal feature. Regularization and moving average updating are performed on the attention feature in sequence, which can ensure that the base vector is updated stably. Specifically, when the next base vector for attention processing is generated according to the reconstructed feature and the temporal feature, the server 104 fuses the reconstructed feature and the temporal feature to obtain the attention feature. The server 104 further performs regularization on the attention feature, for example, L2 regularization may be performed on the attention feature to obtain the regularized feature. The server 104 performs moving average updating on the obtained regularized feature to generate the next base vector for attention processing. Moving average, which is also referred to as exponential weighted average, may be used for estimating a local mean of a variable, so that the updating of the variable is related to a historical value within a period of time. The next base vector for attention processing is a base vector when attention processing is performed next time, that is, when cohesive processing is performed on the temporal feature next time.

In this embodiment, regularization and moving average updating are performed in sequence on the attention feature obtained by fusing the reconstructed feature and the temporal feature, which can ensure that the base vector is updated stably to ensure the high cohesion of the cohesive feature, can accurately express the information of the target video image in the temporal dimension, and is beneficial to improve the accuracy of video behavior recognition.

In one embodiment, the current base vector includes a data size in batch processing, the number of channels of the intermediate image feature, and a dimension of the base vector. The operation of performing feature reconstruction on the temporal feature of the intermediate image feature based on the current base vector to obtain the reconstructed feature includes: performing matrix multiplication and normalized mapping on the current base vector and the temporal feature of the intermediate image feature in sequence to obtain the reconstructed feature.

The data size of the batching processing is an amount of data processed in each batch during batch processing. For example, the current base vector may be $B \times C \times K$, where B is a data size in batch processing, C is a number of channels of the intermediate image feature, and K is a dimension of the base vector. Specifically, when performing feature reconstruction on the temporal feature of the intermediate image feature, the server may perform matrix multiplication on the current base vector and the temporal feature of the intermediate image feature, and perform normalized mapping on a matrix multiplication result to reconstruct the temporal feature to obtain the reconstructed feature.

Further, the operation of generating the next base vector for attention processing according to the reconstructed feature and the temporal feature includes: performing matrix multiplication on the reconstructed feature and the temporal feature to obtain the next base vector for attention processing.

Specifically, the server performs matrix multiplication on the reconstructed feature and the temporal feature to obtain the next base vector for attention processing. The next base vector for attention processing may serve as the base vector for attention processing next time to perform feature reconstruction on the corresponding temporal feature.

Further, the operation of obtaining the cohesive feature corresponding to the temporal feature according to the next base vector for attention processing, the base vector, and the temporal feature includes: fusing the next base vector for attention processing, the base vector, and the temporal feature to obtain the cohesive feature corresponding to the temporal feature.

Specifically, the server fuses the next base vector for attention processing, the base vector, and the temporal feature, to fuse effective information of the next base vector for attention processing, the base vector, and the temporal feature to obtain the cohesive feature corresponding to the temporal feature.

In this embodiment, feature reconstruction is performed on the temporal feature of the intermediate image feature based on the base vector including the data size in batch processing, the number of channels of the intermediate image feature, and the dimension of the base vector, specifically, matrix multiplication and normalized mapping are performed in sequence to obtain the reconstructed feature, matrix multiplication is performed according to the reconstructed vector and the temporal feature to generate a new base vector, the new base vector, the old base vector, and the temporal feature are fused to obtain the cohesive feature corresponding to the temporal feature, to focus the temporal feature to highlight an important feature in the temporal dimension and obtain the cohesive feature with high cohesion, which can accurately express the information of the target video image in the temporal dimension and is beneficial to improve the accuracy of video behavior recognition.

In one embodiment, the operation of fusing, based on priori information, a temporal feature of the intermediate image feature and a cohesive feature corresponding to the temporal feature to obtain a fused feature includes: determining the priori information; performing temporal feature extraction on the intermediate image feature to obtain the temporal feature of the intermediate image feature; and performing, based on the priori information, weighting and fusion on the temporal feature and the cohesive feature corresponding to the temporal feature to obtain a fused feature.

The priori information reflects a priori knowledge of the target video image in the temporal dimension. The priori information is obtained according to the change information of the intermediate image feature in the temporal dimension, and specifically, may be obtained according to the similarity of intermediate image features in the temporal dimension. The temporal feature is used for reflecting the temporal information of the target video image in the video, and the temporal feature of the intermediate image feature may be extracted by performing temporal feature extraction on the intermediate image feature. The weighting and fusion are performed, based on the priori information, on the temporal feature and the cohesive feature corresponding to the temporal feature. For example, when the priori information includes a first priori parameter and a second priori parameter, the weighting and fusion are performed, respectively based on the first priori parameter and a second priori parameter, on the temporal feature and the cohesive feature corresponding to the temporal feature to obtain a fused feature.

Specifically, the server 104 determines priori information. The priori information is obtained according to the change information of the intermediate image feature in the temporal dimension, and specifically, may be obtained according to the similarity of intermediate image features in the temporal dimension. The server 104 performs temporal feature extraction on the intermediate image feature, specifically, may perform feature extraction on the temporal dimension of the intermediate image feature to obtain the temporal feature of the intermediate image feature. Further, the server 104 performs, based on the priori information, weighting and fusion on the temporal feature and the cohesive feature corresponding to the temporal feature to obtain the fused feature, to perform weighting and fusion on the temporal feature and the cohesive feature corresponding to the temporal feature. The fused feature is obtained by fusing the temporal feature and the cohesive feature based on the priori knowledge in the priori information, which can ensure the cohesion of the temporal information in the fused feature and enhance the expression of an important feature in the temporal dimension, thereby improving the accuracy of the video behavior recognition.

In this embodiment, the fused feature is obtained by fusing the temporal feature and the cohesive feature based on the priori knowledge in the priori information, which can ensure the cohesion of the temporal information in the fused feature and enhance the expression of an important feature in the temporal dimension, thereby improving the accuracy of the video behavior recognition.

In one embodiment, the priori information includes a first priori parameter and a second priori parameter. The operation of performing, based on the priori information, weighting and fusion on the temporal feature and the cohesive feature corresponding to the temporal feature to obtain the fused feature includes: performing weighting on the temporal feature based on the first priori parameter to obtain the weighted temporal feature; performing, based on the second priori parameter, weighting on the cohesive feature corresponding to the temporal feature to obtain the weighted cohesive feature; and fusing the weighted temporal feature and the weighted cohesive feature to obtain the fused feature.

The priori information includes a first priori parameter and a second priori parameter, which respectively correspond to the weighting weights of the temporal feature and the cohesive feature corresponding to the temporal feature. Specifically, the server performs weighting on the temporal feature based on the first priori parameter of the priori information to obtain the weighted temporal feature. For example, the first priori parameter may be $k1$, the temporal feature may be $M$, and the weighted temporal feature may be $k1*M$. The server performs, based on the second priori parameter of the priori information, weighting on the cohesive feature corresponding to the temporal feature to obtain the weighted cohesive feature. For example, the second priori parameter may be $k2$, the cohesive feature corresponding to the temporal feature may be $N$, and the weighted cohesive feature may be represented as $k2*N$. The server fuses the weighted temporal feature and the weighted cohesive feature to obtain the fused feature. For example, the fused feature obtained by fusing through the server may be represented as $k1*M+k2*N$.

In this embodiment, the fused feature is obtained by fusing the temporal feature and the cohesive feature based on the first priori parameter and the second priori parameter in the priori information, which can ensure the cohesion of the temporal information in the fused feature and enhance the expression of an important feature in the temporal dimension, thereby improving the accuracy of the video behavior recognition.

In one embodiment, before fusing, based on the priori information, the temporal feature of the intermediate image feature and the cohesive feature corresponding to the temporal feature to obtain the fused feature, the method further includes: performing normalization on the intermediate image feature to obtain a normalized feature; and performing nonlinear mapping on the normalized feature to obtain a mapped intermediate image feature.

The intermediate image feature may be normalized by performing the normalization, which is beneficial to solve the problems of gradient disappearance and gradient explosion, and can ensure the network learning rate. The normalization may be realized through batch normalization (BN). The nonlinear mapping may introduce a nonlinear factor, to remove the linearity of the intermediate image feature, which is beneficial for enhancing flexible expression of the intermediate image feature. Specifically, after obtaining the intermediate image feature, the server 104 performs normalization on the intermediate image feature, for example, normalization may be performed on the intermediate image feature through a BN layer structure to obtain the normalized feature. Further, the server 104 performs nonlinear mapping on the normalized feature, for example, the nonlinear mapping may be performed on the normalized feature through an activation function to obtain a mapped intermediate image feature.

Further, the operation of fusing, based on priori information, a temporal feature of the intermediate image feature and a cohesive feature corresponding to the temporal feature to obtain a fused feature includes: fusing, based on the priori information, the temporal feature of the mapped intermediate image feature and the cohesive feature corresponding to the temporal feature to obtain the fused feature, the priori information being obtained according to change information of the mapped intermediate image feature in the temporal dimension.

Specifically, after obtaining the mapped intermediate image feature, the server 104 fuses, based on the priori information, the temporal feature of the mapped intermediate image feature and the cohesive feature corresponding to the temporal feature to obtain the fused feature. The priori information is obtained according to change information of the mapped intermediate image feature in the temporal dimension, and the cohesive feature is obtained by performing attention processing on the temporal feature of the mapped intermediate image feature.

In this embodiment, after obtaining the intermediate image feature, the normalization and the nonlinear mapping are further performed on the intermediate image feature to enhance the feature expression of the intermediate image feature. The video behavior recognition processing is performed based on the mapped intermediate image feature, which can further improve behavior information expressiveness of a behavior recognition feature, and is beneficial to improve the accuracy of video behavior recognition.

In one embodiment, the operation of performing normalization on the intermediate image feature to obtain a normalized feature includes: performing normalization on the intermediate image feature through a BN layer structure to obtain the normalized feature.

The BN layer structure is a BN layer structure that may perform normalization on the intermediate image feature. Specifically, the server may perform normalization on intermediate image features in batches through the BN layer structure to obtain a normalized structure, so that the processing efficiency of normalization can be ensured.

Further, the operation of performing nonlinear mapping according to the normalized feature to obtain the mapped intermediate image feature includes: performing nonlinear mapping on the normalized feature through an activation function to obtain the mapped intermediate image feature.

The activation function is used for introducing a nonlinear factor, to realize nonlinear mapping of the normalized feature. A specific form of the activation function may be set according to actual needs. For example, a ReLU function may be set, so that the server performs nonlinear mapping on the normalized feature through the activation function to obtain the mapped intermediate image feature.

In this embodiment, after obtaining the intermediate image feature, the normalization and the nonlinear mapping are further performed on the intermediate image feature in sequence through the BN layer structure and the activation function, so as to enhance the feature expression of the intermediate image feature and improve the processing efficiency.

This application further provides an application scenario. The application scenario is applied to the above video behavior recognition method. Specifically, an application of the video behavior recognition method in this application scenario is described as follows.

For video behavior recognition processing, spatial-temporal information modeling is one of the core problems for video behavior recognition. In recent years, mainstream methods mainly include a behavior recognition method based on a two-stream network and a behavior recognition method based on a 3-Dimensional (3D) convolutional network. The former extracts RGB and optical flow features through two parallel networks, while the latter simultaneously models temporal and spatial information through 3D convolution. However, the efficiency of the methods is limited by a large number of model parameters and computational power losses. On this basis, subsequent improved methods respectively model the temporal and spatial information in a mode of decomposing a 3D convolution into a 2-Dimensional (2D) spatial convolution and a 1-Dimensional (1D) spatial convolution, so as to improve the efficiency of a model.

A better spatial-temporal feature is extracted by designing different network structures. However, different influences of spatial-temporal cues on different action classes are ignored. For example, some actions are very easily differentiated by using only one picture even without the temporal information. This is because the actions have significant spatial information in different scenarios, which may be used as highly reliable action classes for prediction. However, temporal information is essential for fine-grained action recognition. For example, for differentiating bow pushing and bow pulling actions in an action of "playing the violin", the bow pushing and bow pulling actions can only be differentiated accurately based on the temporal information. A video typically contains much time-related content. In such multidimensional information, only a spatial-temporal feature is independently decomposed and modeled, and correlations of the spatial-temporal information among different action classes have a great difference and have different contribution on the spatial-temporal information during recognition, which results in that the spatial-temporal information cannot effectively reflect behavior information in the video. In addition, a temporal boundary of an action in the video is unclear, that is, a start time and an end time of the action are not clear, and duration is uncertain, which results in low accuracy of video behavior recognition.

On this basis, in this embodiment, the weights of temporal information and spatial information may be adaptively adjusted by using a network structure search policy with the above video behavior recognition method. According to different contribution during behavior recognition, deep correlation between the temporal information and the spatial information is analyzed, and spatial-temporal interaction is learned jointly. In addition, a rhythm adjuster is designed, to obtain a high cohesion expression of the temporal information according to priori information of an action rhythm and a structural parameter of a temporal convolution, so as to adjust actions of different rhythms. Therefore, the problem of feature expression difference caused by the same action having different rhythms is solved, improving the accuracy of video behavior recognition.

Specifically, the video behavior recognition method includes: extracting a video image feature from at least two video images. Specifically, at least two video images may be inputted into an artificial neural network, and a video image feature is extracted by the artificial neural network. Contribution adjustment is performed on a spatial feature of the video image feature to obtain an intermediate image feature. Specifically, the contribution adjustment is performed on the spatial feature of the video image feature based on a pre-trained structural parameter. A temporal feature of the intermediate image feature and a cohesive feature corresponding to the temporal feature are fused based on priori information to obtain a fused feature. Then, temporal feature contribution adjustment is performed on the fused feature to obtain a behavior recognition feature. Specifically, the temporal feature contribution adjustment may be performed on the fused feature through a structural parameter. Finally, video behavior recognition is performed based on the behavior recognition feature to obtain a behavior recognition result.

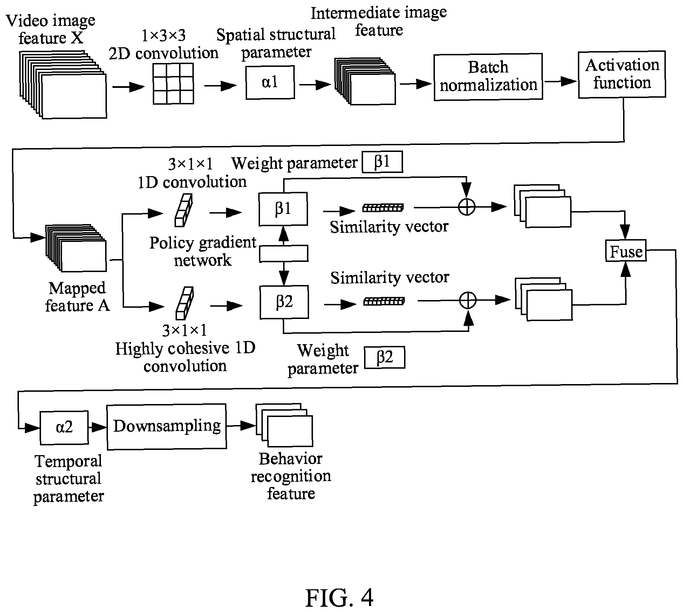

The video behavior recognition method of this embodiment is implemented based on a video behavior recognition model. FIG. 4 is a schematic structural diagram of a network structure of a video behavior recognition model in this embodiment. X is the video image feature extracted from the at least two video images. Spatial feature extraction is performed through $1\times3\times3$ 2D convolution to obtain a spatial feature, and contribution adjustment is performed on the spatial feature based on a spatial structural parameter $\alpha1$ of a structural parameter to obtain an intermediate image feature. BN processing and nonlinear mapping of an activation function are performed on the intermediate image feature in sequence. Specifically, the BN processing and the nonlinear mapping of the intermediate image feature may be realized through a BN layer structure and a ReLU layer structure. An obtained mapped feature A is subjected to temporal feature extraction through two $3 \times 1 \times 1$ 1D convolutions. One branch is a highly cohesive 1D convolution processing, so that a cohesive feature corresponding to the temporal feature of the intermediate image feature may be extracted. For a result obtained by performing temporal feature extraction through 1D convolution, weighted adjustment is performed based on weight parameters $\beta 1$ and $\beta 2$ of priori information, and weighted adjustment results of the two branches are fused. The weight parameters $\beta 1$ and $\beta 2$ may be structural parameters obtained by training based on a policy gradient agent network. Residual correction is performed on initial weight parameters $\beta 1$ and $\beta 2$ by determining a similarity of features A in a temporal dimension, and weighting is performed on an extraction result of the 1D convolution based on the weighting parameters $\beta 1$ and $\beta 2$ after the residual correction. After the results of the two 1D convolution branches are fused, temporal feature contribution adjustment is performed on the fused feature through a temporal structural parameter $\alpha 2$ of the structural parameter, and a behavior recognition feature is obtained after down-sampling is performed on the fused feature after the contribution adjustment. The behavior recognition feature is used for video behavior recognition to obtain a behavior recognition result.

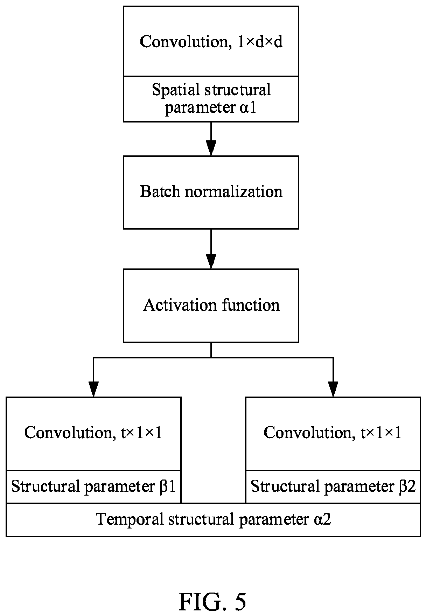

The structural parameter refers to a weight parameter of an operation such as convolution defined in an operating space, and is a concept in network structure search technology. In this embodiment, structural parameters corresponding to temporal and spatial convolutions to be fused, including $\alpha 1$ and $\alpha 2$, are optimized and updated in two structural parameter update modes, that is, a differential mode and a policy gradient mode. In the fusion of a highly cohesive temporal convolution module and a 1D temporal convolution module, weighting and fusion may also be performed by using pre-trained structure parameters $\beta 1$ and $\beta 2$. As shown in FIG. 5, the structural parameter fused with temporal and spatial convolutions includes $\alpha 1$ and $\alpha 2$, the structural parameter that performs weighting and fusion on two temporal convolution branches includes $\beta 1$ and $\beta 2$. Specifically, spatial feature extraction is performed on the video image feature extracted from the target video image through a $1 \times d \times d$ 2D convolution. Contribution adjustment is performed on an extraction result through the spatial structural parameter $\alpha 1$. Specifically, fusion is performed on the feature extraction result and the structural parameter to realize contribution adjustment. BN processing and nonlinear mapping of an activation function are performed in sequence after the contribution adjustment. Temporal feature extraction is performed on a mapped result through two $t \times 1 \times 1$ 1D convolutions respectively. Weighting and fusion are performed on the extracted result through structure parameters $\beta 1$ and $\beta 2$. Temporal feature contribution adjustment is performed on a weighting and fusion result through a structure parameter $\alpha 2$ to obtain a behavior recognition feature for video behavior recognition processing.

Specifically, when the structural parameter is trained, for differential mode-based updating, a multi-dimensional structural parameter, for example, a multi-dimensional structural parameter vector, and specifically, a two-dimensional vector, is predefined, which has a gradient in the differential mode-based updating. Dimensions of the structural parameters respectively represent structural parameters corresponding to a spatial convolution and a temporal convolution. The structural parameter acts on the spatial convolution and the temporal convolution to fuse the features thereof. Specifically, $\alpha 1$ acts on the spatial convolution to perform contribution adjustment, and $\alpha 2$ acts on the temporal convolution to perform contribution adjustment. An error value is calculated according to a predicted result and an actual result of the video behavior recognition model, the structural parameter is updated by using a gradient descent algorithm, and a trained structural parameter is obtained at the end of training.

Further, the error value is calculated according to the predicted result and the actual result of the video behavior recognition model, and the structural parameter is optimized in the differential mode when being updated by using the gradient descent algorithm. The operating space in the network structure search technology is marked as O, o is a specific operation, a node refers to a set of a basic operating unit in the network structure search method, and i and j are set as two sequentially adjacent nodes. A weight of a group of candidate operations therebetween is marked as a, , and P is a corresponding probability distribution. A candidate operation with the maximum probability between the nodes i and j is obtained through a max function. A final network structure is formed by stacking the operations obtained by searching between different nodes, as shown in the following Formula (1):

$$\sum_{i=0, j=0}^{N} \max\left(P_{ij}\left(O_{ij}\right)\right) \qquad (1)$$

where, N represents a quantity of nodes.

From a horizontal perspective, the above operation is equivalent to learning a selected specific operation, and the operating space is limited on the cascaded 2D convolution and 1D convolution to be directly optimized through a gradient, so as to search to obtain a corresponding network structure, as shown in the following Formula (2):

$$\nabla_w L_{train}\left(w, \alpha\right) \tag{2}$$

where, $\nabla_w$ represents gradient optimization, $L_{train}(w, \alpha)$ represents a target function of the network structure, and w represents a model parameter of the network structure.

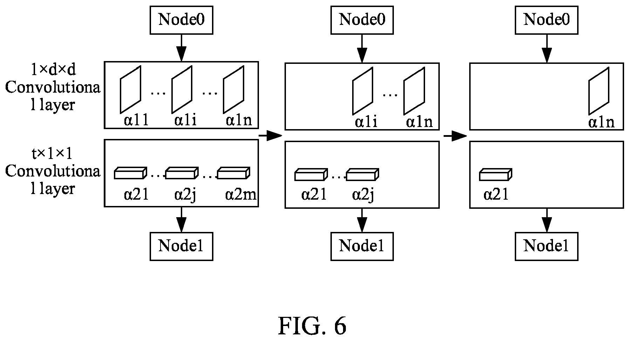

From a vertical perspective, the above operation is equivalent to enhancing or weakening the importance of features of the 2D spatial convolution and the 1D temporal convolution during feature learning based on the structural parameter. As shown in FIG. 6, blocks of this embodiment are set between two nodes. For example, for a residual neural network (ResNet), these nodes represent an output of a previous block and an input of a next block. A $1\times d\times d$ convolution and a $t\times1\times1$ convolution that are sequentially connected are set in the blocks. The structural parameter is used on the two convolutions to adjust the strength thereof. A structure parameter $\alpha_1$ that meets a contribution adjustment requirement of the 2D convolution is searched from $\alpha_{11}$ ... $\alpha_{1i}$ ... $\alpha_{1n}$ through training, and a structure parameter $\alpha_2$ that meets a contribution adjustment requirement of the 1D convolution is searched from $\alpha_{21}...\alpha_{2j}$ ... $\alpha_{2m}$ through training. In FIG. 6, $\alpha_{1n}$ is determined as the structural parameter $\alpha_1$, and $\alpha_{21}$ is determined as the structural parameter $\alpha_2$. $o(\cdot)$ represents an operation that is defined in search space O and acts on an input x, a weight vector between the node i and the node j is $\alpha^{(i,j)}$, and the following Formula (3) may be obtained:

$$y^{(i,j)} = \sum_{o\in O} F_{i,j}\left(w_O, \alpha_o^{(i,j)}\right) o\left(x\right) \tag{3}$$

where, F represents a linear mapping of the weight vector, and $y^{(i,j)}$ represents a sum of linear mappings of all weight vectors in the search space.

Specifically, F may be set as a fully connected layer, and each cell is defined as a (2+1)D convolutional block, so $\alpha_o^{(i,j)}$ is fixed. Therefore, a learning objective may be further simplified as the following Formula (4):

$$y = g\left(w_\alpha, w_n, x\right) \tag{4}$$

where, $w_\alpha$ represents a structural parameter of a network, $w_n$ represents a model parameter of the network, and y represents an output of the (2+1)D convolutional block.

By using a lightweight search space, a structural parameter and a model parameter may be subjected to peer-to-peer training simultaneously during specific implementation to learn a set of structural parameters for each (2+1) D convolutional block, so that an obtained optimization mode is as following Formula (5):

$$\nabla L_{val}\left(w_\alpha, w_n\right) \tag{5}$$

That is, the structural parameter $w_a$ and the model parameter $w_n$ of the network are synchronously trained, and are subjected to gradient descent optimization based on a target function $L_{val}$, so as to obtain the structural parameter $w_\alpha$ and the model parameter $w_n$ that meet requirements to realize network training.

For policy gradient mode-based updating, a multi-dimensional structural parameter, for example, a multi-dimensional structural parameter vector, specifically, a two-dimensional vector, is predefined, which blocks gradient information in the policy gradient mode-based updating. Dimensions of the structural parameters represent structural parameters corresponding to a spatial convolution and a temporal convolution. A policy gradient agent network is predefined to generate a next structural parameter according a current structural parameter and a network state of the policy gradient agent network. The generated structural parameter acts on the spatial convolution and the temporal convolution to fuse the features thereof. A network structure of the agent is updated according to a reward of the current network state of the policy gradient agent network, and the next structural parameter is predicted by a new agent, so as to update the structural parameter.

Specifically, policy gradient descent is a reinforcement learning method. A policy refers to actions taken in different states, and aims to perform gradient descent based on a policy, so that the trained policy gradient network agent can make corresponding actions according to the current state, and a higher reward may be obtained. When the structural parameter is optimized in a policy gradient mode, a multilayer perceptron (MLP) may be used as the policy gradient network agent, a parameter of a current policy gradient network agent may be used as a state, a structural parameter output by a network is used as an action, and a current backbone network is used, that is, a loss and a reward constant of a video behavior recognition module are used as components of a reward function. In a forward processing flow, an initial structural parameter is inputted into an agent network first, and the network will predict a network parameter, that is, action, according to the current agent network parameter and the input structural parameter. In a back propagation process, the reward that can be obtained currently is maximized, and the parameter of the agent network is updated through the reward. A current state is set as s, a represents a current action, θ represents a parameter of the network, and then, a cross entropy loss CE is shown in the following Formula (6):

$$CE\left(\hat{y}\right) = -\left[y\log \hat{y} + (1-y)\log\left(1-\hat{y}\right)\right] \tag{6}$$

where, $\hat{y}$ represents a predicted output of a model, and y represents an actual label.

In order to ensure that the search for structural parameters has a positive influence on the overall learning of the network, a reward function may be designed based on a smoothed CE value, so that the searched structural parameters and the learning of the backbone network of the video behavior recognition model are mutually supportive. The smoothed CE value is shown in the following Formula (7):

$$SCE = -(1-\varepsilon)CE(i) + \varepsilon\sum \frac{CE(j)}{N} \tag{7}$$

where $i,j$ and $N$ respectively represent quantities of correct classes, other classes, and total classes, and ε represents a small constant.

Further, if $SCE_n$ obtained in a next time step n is greater than $SCE_m$ obtained in a previous time step m, a positive reward $\gamma$ is given, and otherwise, the reward is $-\gamma$, as shown in the following Formula (8):

$$L = \sum \log_\pi\left(a\,|\,s,\theta\right)f\left(s,a\right) \tag{8}$$

where, $f$ represents a reward, and $\gamma$ represents a set variable.

An overall target function is shown in the following (9), and $f(s,a)$ is a predicted output of the network.

$$L = \sum \log_\pi\left(a\,|\,s,\theta\right)f\left(s,a\right) \tag{9}$$

Specifically, the MLPs corresponding to the structural parameters of two parts of a priori excitation module for spatial-temporal information importance and narrowing an intra-class difference are respectively three-layer neural networks with six layer neurons and four hidden layer neurons. In addition, a ReLU activation function is added between adjacent layers and the last layer is a softplus activation function. Since a policy gradient mechanism needs a complete state behavior sequence, the lack of feedback in an intermediate state will lead to a poor overall training effect. For a state sequence length, in one method, the state sequence length may be set as one epoch, that is, the reward of a recent epoch is calculated once every two epochs, in another method, the state sequence length may be set as an optimization within one round of iteration, which is more beneficial to optimizing. During optimizing, the parameter of the network and the parameter of the agent are separated and optimized separately. Different optimizers may be used for two parameters, the agent optimizer is an Adam optimizer, and the network parameter is optimized by using stochastic gradient descent (SGD). The two are updated alternately during optimization.

When the structural parameter are used to the spatial convolution and the temporal convolution to fuse the features thereof, specifically, spatial-temporal information in a video image feature are fused by using an Auto(2+1)D convolutional structure, that is, a structure of 2D convolution +1D convolution according to the structural parameter. The Auto(2+1)D is composed of a 2D convolution and a 1D convolution that are sequentially connected, corresponding structural parameters, and an activation function. Spatial information and temporal information in a feature are respectively decoupled through the 2D convolution and the 1D convolution and are modeled independently, that is, spatial feature extraction is performed through the 2D convolution, and temporal feature extraction is performed through the 1D convolution. When the structural parameter is trained, the decoupled information is adaptively fused through the structural parameter, and the nonlinear expression capability of the model is increased through the activation function. A basic convolutional block is formed by the 2D convolution and the 1D convolution, which may be used as a basic block structure in a network, for example, may be used as a block structure in a ResNet.

In a process of adjusting the rhythm of a behavior by using a rhythm adjuster based on a similarity of the proposed features in the temporal dimension and a structural parameter corresponding to priori information, including priori parameters $\beta1$ and $\beta2$, the rhythm adjuster includes a priori excitation module and a highly cohesive temporal expression module. The priori excitation module may set a margin for a current structural parameter according to the similarity of the features in the temporal dimension, to promote the optimization of the structural parameter. The highly cohesive temporal expression module may improve the cohesion of temporal dimension information through an efficient attention mechanism. Specifically, a feature map outputted by a previous layer is inputted into the 2D convolution to extract a spatial feature. A feature outputted by the 2D convolution is inputted into the priori excitation module, the similarity of the feature in the temporal dimension is calculated, and an appropriate margin is set for the structural parameter according to a similarity. In another aspect, the feature outputted by the 2D convolution is inputted into the highly cohesive temporal module and the 1D temporal convolution module, and feature maps are outputted. Weights of the feature maps outputted by the highly cohesive temporal module and the 1D temporal convolution module are adaptively adjusted and fused according to the structural parameter of the priori information to obtain a fused feature.

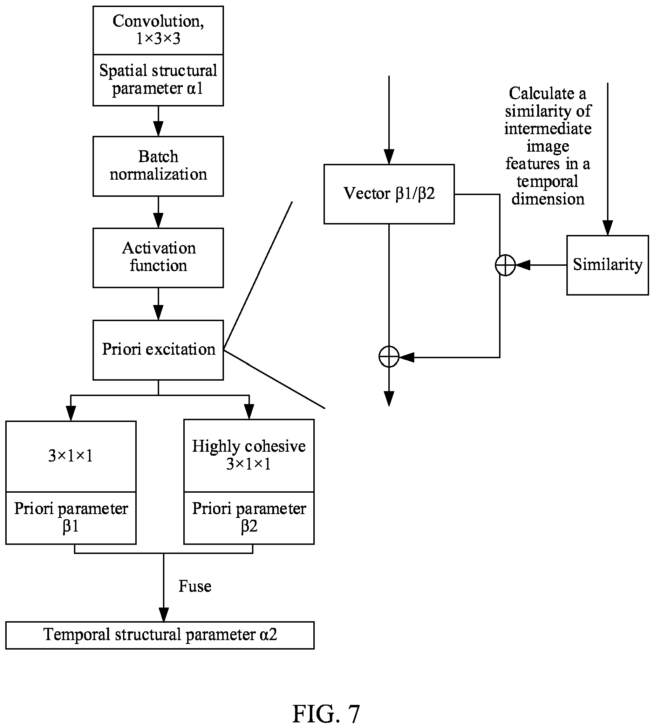

Specifically, in order to excite the network to be optimized towards the direction of a highly cohesive temporal feature through the priori information, the temporal convolution branch $3\times1\times1$ is changed into two branches of a $3\times1\times1$ temporal convolution and a $3\times1\times1$ temporal convolution with an expectation-maximum (EM) attention. The priori excitation module mainly acts on the feature through the excitation of the optimization of the priori parameter $\beta1$ and $\beta2$. As shown in FIG. 7, spatial feature extraction is performed on the video image feature extracted from the target video image through a $1\times3\times3$ 2D convolution. Contribution adjustment is performed on an extraction result through $\alpha1$. BN processing and nonlinear mapping of an activation function are performed in sequence after the contribution adjustment. A mapped result is processed through the priori excitation module. In the priori excitation module, a similarity of a mapped result in the temporal dimension is calculated, and initial priori parameters $\beta1$ and $\beta2$ are corrected based on the similarity. Weighting and fusion are performed on the results obtained by performing temporal feature extraction through the two $t\times1\times1$ 1D convolutions based on the corrected priori parameters $\beta1$ and $\beta2$, and temporal feature contribution adjustment is performed on a weighting and fusion result through a structural parameter $\alpha2$ to obtain a behavior recognition feature for video behavior recognition processing.

In FIG. 7, arrows represent flow directions of a feature map, which are connected in a manner of inputting the feature map outputted from the previous module into the next module, and then the feature maps obtained after the priori similarity excitation module are inputted into the next convolutional block. The final output is to concatenate the feature maps of two branches and to reduce the dimension. In order to excite the network to be optimized towards a direction of a highly cohesive temporal feature or a highly static feature through priori information, first, a cosine similarity in the temporal dimension according to the feature map obtained by the $1\times3\times3$ convolution, so as to measure the change degree of the sample in the temporal dimension, and a current priori parameter is divided into a positive parameter and a negative parameter based on a change degree threshold. During specific implementation, for a video with slow action rhythm, there is much redundant information between every two target video images, and a cohesive feature needs to be enhanced. The weight of the cohesive feature may be increased to highlight a focal feature to perform behavior recognition, thereby improving the accuracy of video behavior recognition. Specifically, the priori parameter after being excited to be corrected and the originally input priori parameter are merged in a residual connection mode as a final priori parameter. In a case that the network is optimized to a certain degree, an element value of a tensor often do not have significant variance and are uniformly small. During specific implementation, a threshold may be dynamically adjusted to set current similarity priori information by setting a margin, and the following Formula (10) may be obtained:

$$Sim = \max\left(0, Sim - \left(Thres + abs\left(\beta1 - \beta2\right)\right)\right)$$

$$(10)$$

where, Sim represents a similarity value, Thres represents a threshold, and $\beta1$ and $\beta2$ represent priori parameters.

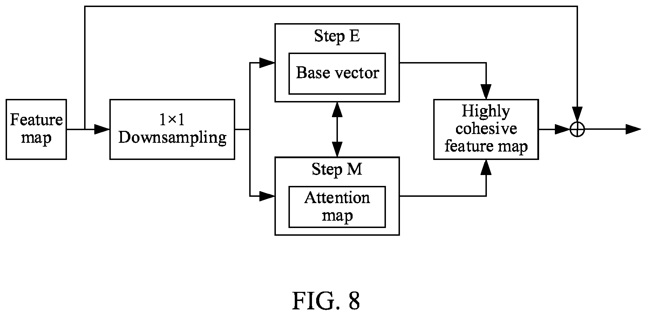

Further, a highly cohesive temporal module obtains a highly cohesive temporal expression based on an EM algorithm-optimized attention mechanism. For each sample, a feature is reconstructed through a fixed number of times of iterative optimization. As shown in FIG. 8, this process may include step E and step M. After being subjected to down-sampling, the feature map is processed through step E and step M and is fused to obtain a highly cohesive feature. First, assuming that there is a base vector B×C×K, where B is batch size, that is, a data size in batch processing, C is a number of channels corresponding to an originally input intermediate image feature, and K is a dimension of the base vector. In step E, matrix multiplication is performed on the base vector and a spatial feature of a B×(H×W)×C after being subjected to spatial feature extraction, and an original feature is reconstructed by softmax to obtain a feature map with the size of B×(H×W)×K. In step M, a reconstructed feature map with the size of B×(H×W)×K is multiplied by the original feature map of B×(H×W)×C to obtain a new base vector B×C×K. Further, in order to ensure stable updating of the base vector, L2 regularization is performed on the base vector, and moving average updating of the base vector is added during training, which is specifically as shown in the following Formula (11):

$$mu = mu * momentum + mu\_mean * \left(1 - momentum\right) \tag{11}$$

where, mu represents a base vector, mu_mean represents a mean thereof, and momentum represents a momentum.

Finally, matrix multiplication is performed on the base vector obtained in step E and an attention map obtained in step M, and a finally reconstructed feature map with global information is obtained.

The video behavior recognition method in this embodiment is applied to the field of video recognition, and 3D convolution is widely used in the field of video recognition at present. However, it is difficult to expand due to the limitation of the large number of parameters. In some improved methods, the 3D convolution is decomposed into a 2D convolution and a 1D convolution on the basis of low computing costs, low memory requirements, and high performance. Subsequently, a lot of work focuses on obtaining more expressive features by designing different network structures. However, different influences of spatial and temporal cues in videos on different action classes is not considered in the field. An adaptive spatial-temporal entanglement network involved in the video behavior recognition method in this embodiment automatically fuse decomposed spatial-temporal information based on importance analysis, to obtain stronger spatial-temporal expression. In the video behavior recognition method, a spatial-temporal convolutional filter is adaptively re-combined and decoupled by an Auto(2+1) D convolution through network structure search technology to model spatial-temporal inconsistent contribution information, so that deep correlation between the temporal information and the spatial information is analyzed, and spatial-temporal interaction is learned jointly. The modeling capability of a current model to the spatial-temporal information is enhanced by integrating the spatial-temporal information with different weights. The rhythm adjuster extracts the highly cohesive feature in the temporal dimension by using an effective attention mechanism of the EM algorithm. The temporal information of actions with different rhythms may be adjusted according to priori information of an action rhythm and a structural parameter of a temporal convolution, to obtain a highly cohesive expression of the temporal information to deal with a problem of different duration in different action classes, which can improve the accuracy of video behavior recognition.

It is to be understood that, although steps of the flowcharts in FIG. 2 and FIG. 3 are shown sequentially according to arrows, these steps are not necessarily performed according to an order indicated by the arrows. Unless explicitly stated herein, there is no strict order restriction on the performing of these steps, and these steps may be performed in other orders. In addition, at least part of the steps in FIG. 2 to FIG. 3 may include multiple steps or multiple stages, and these steps or stages are not necessarily completed at the same time, but may be executed at different times. These steps or stages are not necessarily performed in order, but may be performed in turn or alternately with other steps or at least part of the steps or stages of other steps.

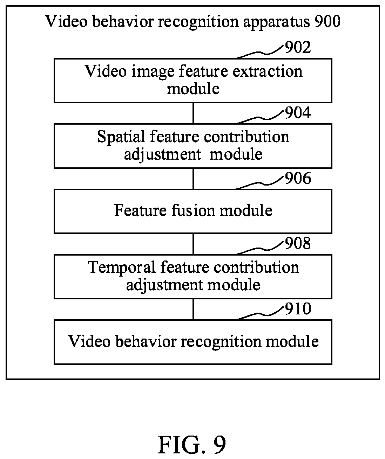

In one embodiment, as shown in FIG. 9, a video behavior recognition apparatus 900 is provided. The apparatus may use a software module or a hardware module, or a combination of the two to form part of a computer device. The apparatus specifically includes: a video image feature extraction module 902, a spatial feature contribution adjustment module 904, a feature fusion module 906, a temporal feature contribution adjustment module 908, and a video behavior recognition module 910. The video image feature extraction module 902 is configured to extract a video image feature from at least two video images. The spatial feature contribution adjustment module 904 is configured to perform contribution adjustment on a spatial feature of the video image feature to obtain an intermediate image feature. The feature fusion module 906 is configured to fuse, based on priori information, a temporal feature of the intermediate image feature and a cohesive feature corresponding to the temporal feature to obtain a fused feature, the priori information is obtained according to change information of the intermediate image feature in a temporal dimension, and the cohesive feature is obtained by performing attention processing on the temporal feature. The temporal feature contribution adjustment module 908 is configured to perform temporal feature contribution adjustment on the fused feature to obtain a behavior recognition feature. The video behavior recognition module 910 is configured to perform video behavior recognition based on the behavior recognition feature.

In one embodiment, the spatial feature contribution adjustment module 904 is further configured to: perform spatial feature extraction on the video image feature to obtain a spatial feature of the video image feature; and perform contribution adjustment on the spatial feature based on a spatial structural parameter of a structural parameter to obtain the intermediate image feature, the structural parameter is obtained by training a video image sample carrying a behavior label. The temporal feature contribution adjustment module 908 is further configured to perform contribution adjustment on the fused feature through the temporal structural parameter of the structural parameter to obtain the behavior recognition feature.

In one embodiment, the apparatus further includes a to-be-trained parameter determination module, an intermediate sample feature obtaining module, a fused sample feature obtaining module, a behavior recognition sample feature obtaining module, and an iteration module. The to-be-trained parameter determination module is configured to determine a to-be-trained structural parameter. The intermediate sample feature obtaining module is configured to perform contribution adjustment on a spatial sample feature of a video image sample feature based on the spatial structural parameter of the to-be-trained structural parameter to obtain an intermediate sample feature, the video image sample feature is extracted from the video image sample. The fused sample feature obtaining module is configured to fuse, based on priori sample information, a temporal sample feature of the intermediate sample feature and a cohesive sample feature corresponding to the temporal sample feature to obtain a fused sample feature, the cohesive sample feature is obtained by performing attention processing on the temporal sample feature, and the priori sample information is obtained according to change information of the intermediate sample feature in a temporal dimension. The behavior recognition sample feature obtaining module is configured to perform contribution adjustment on the fused sample feature based on the temporal structural parameter of the to-be-trained structural parameter to obtain the behavior recognition sample feature. The iteration module is configured to perform video behavior recognition based on the behavior recognition sample feature, update the to-be-trained structural parameter according to the behavior recognition result and the behavior label corresponding to the video image sample, and perform training continually until the training is ended to obtain the structural parameter.

In one embodiment, the video behavior recognition apparatus is implemented through a video behavior recognition model, and the to-be-trained structural parameter is a parameter of the video behavior recognition model during training. The iteration module further includes a recognition result obtaining module, a difference determination module, a structural parameter updating module, and a structural parameter obtaining module. The recognition result obtaining module is configured to obtain a behavior recognition result outputted from the video behavior recognition model. The difference determination module is configured to determine a difference between the behavior recognition result and the behavior label corresponding to the video image sample. The structural parameter updating module is configured to update a model parameter of the video behavior recognition model and the to-be-trained structural parameter according to the difference. The structural parameter obtaining module is configured to perform training continually based on the updated video behavior recognition model until the training is ended, and obtain the structural parameter according to the trained video behavior recognition model.

In one embodiment, the iteration module further includes a recognition loss determination module, a reward obtaining module, and a reward processing module. The recognition loss determination module is configured to determine a behavior recognition loss between the behavior recognition result and the behavior label corresponding to the video image sample. The reward obtaining module is configured to obtain a reward according to the behavior recognition loss and a previous behavior recognition loss. The reward processing module is configured to update the to-be-trained structural parameter according to the reward, and perform training continually based on the updated to-be-trained structural parameter to obtain the structural parameter until a target function satisfies an ending condition, the target function is obtained based on each reward in a training process.

In one embodiment, the reward obtaining module is further configured to: update the model parameter of a policy gradient network model according to the reward; and update the to-be-trained structural parameter based on the updated policy gradient network model.

In one embodiment, the reward obtaining module is further configured to: perform, by the updated policy gradient network model, structural parameter prediction based on the updated model parameter and the to-be-trained structural parameter to obtain a predicted structural parameter; and obtain, according to the predicted structural parameter, the structural parameter after the to-be-trained structural parameter is updated.

In one embodiment, the apparatus further includes a similarity determination module and a priori information correction module. The similarity determination module is configured to determine a similarity of an intermediate image feature in a temporal dimension. The priori information correction module is configured to correct initial priori information based on the similarity to obtain the priori information.

In one embodiment, the initial priori information includes a first initial priori parameter and a second initial priori parameter. The priori information correction module includes a similarity adjustment module, a priori parameter correction module, and a priori information obtaining module. The similarity adjustment module is configured to dynamically adjust the similarity according to the first initial priori parameter, the second initial priori parameter, and a preset threshold. The priori parameter correction module is configured to correct the first initial priori parameter and the second initial priori parameter through the dynamically adjusted similarity to obtain a first priori parameter and a second priori parameter. The priori information obtaining module is configured to obtain the priori information according to the first priori parameter and the second priori parameter.

In one embodiment, the apparatus further includes a base vector determination module, a feature reconstruction module, a base vector updating module, and a cohesive feature obtaining module. The base vector determination module is configured to determine a current base vector. The feature reconstruction module is configured to perform feature reconstruction on the temporal feature of the intermediate image feature based on the current base vector to obtain a reconstructed feature. The base vector updating module is configured to generate a next base vector for attention processing according to the reconstructed feature and the temporal feature. The cohesive feature obtaining module is configured to obtain a cohesive feature corresponding to the temporal feature according to the next base vector for attention processing, the base vector, and the temporal feature.

In one embodiment, the base vector updating module further includes an attention feature module, a regularization module, and a moving average updating module. The attention feature module is configured to fuse the reconstructed feature and the temporal feature to generate an attention feature. The regularization module is configured to perform regularization on the attention feature to obtain a regularized feature. The moving average updating module is configured to perform moving average updating on the regularized feature to generate the next base vector for attention processing.

In one embodiment, the current base vector includes a data size in batch processing, the number of channels of the intermediate image feature, and a dimension of the base vector. The feature reconstruction module is further configured to perform matrix multiplication and normalized mapping on the current base vector and the temporal feature of the intermediate image feature in sequence to obtain the reconstructed feature. The base vector updating module is further configured to perform matrix multiplication on the reconstructed feature and the temporal feature to obtain the next base vector for attention processing. The cohesive feature obtaining module is further configured to fuse the next base vector for attention processing, the base vector, and the temporal feature to obtain the cohesive feature corresponding to the temporal feature.

In one embodiment, the feature fusion module 906 is further configured to: determine priori information; perform temporal feature extraction on the intermediate image feature to obtain the temporal feature of the intermediate image feature; and perform, based on the priori information, weighting and fusion on the temporal feature and the cohesive feature corresponding to the temporal feature to obtain the fused feature.

In one embodiment, the priori information includes a first priori parameter and a second priori parameter. The feature fusion module 906 is further configured to: perform weighting on the temporal feature based on the first priori parameter to obtain the weighted temporal feature; perform, based on the second priori parameter, weighting on the cohesive feature corresponding to the temporal feature to obtain the weighted cohesive feature; and fuse the weighted temporal feature and the weighted cohesive feature to obtain the fused feature.

In one embodiment, the apparatus further includes a normalization module and a nonlinear mapping module. The normalization module is configured to perform normalization on the intermediate image feature to obtain a normalized feature. The nonlinear mapping module is configured to perform nonlinear mapping on the normalized feature to obtain a mapped intermediate image feature. The feature fusion module 906 is further configured to fuse, based on the priori information, the temporal feature of the mapped intermediate image feature and the cohesive feature corresponding to the temporal feature to obtain the fused feature, the priori information being obtained according to change information of the mapped intermediate image feature in the temporal dimension.

In one embodiment, the normalization module is further configured to perform normalization on the intermediate image feature through a BN layer structure to obtain the normalized feature. The nonlinear mapping module is configured to perform nonlinear mapping on the normalized feature through an activation function to obtain the mapped intermediate image feature.

Specific definition of the video behavior recognition apparatus may refer to the definition of the video behavior recognition method hereinabove. Each module in the above video behavior recognition apparatus may be implemented entirely or partially through software, hardware, or a combination thereof. Each of the above modules may be embedded in or independent of a processor in a computer device, or may be stored in a memory in the computer device in a software form, so that the processor invokes operations corresponding to the above modules.

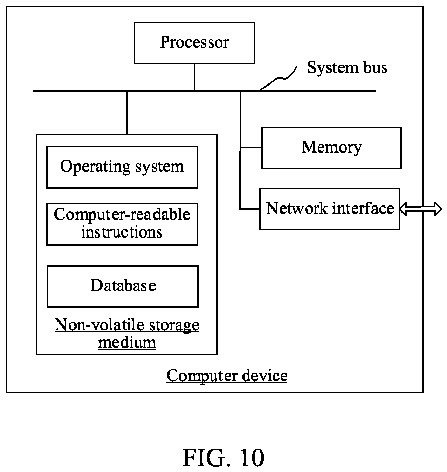

In one embodiment, a computer device is provided. The computer device may be a server or a terminal, and a diagram of an internal structure thereof may be as shown in FIG. 10. The computer device includes a processor, a memory, and a network interface connected by a system bus. The processor of the computer device is configured to provide computing and control capabilities. The memory of the computer device includes a non-volatile storage medium and an internal memory. The non-volatile storage medium stores an operating system, computer-readable instructions, and a database. The internal memory provides an environment for the operation of the operating system and computer-readable instructions in the non-volatile storage medium. The database of the computer device is configured to store model data. The network interface of the computer device is configured to connect and communicate with an external terminal through a network. The computer-readable instructions, when executed by a processor, implement a video behavior recognition method.

It will be understood by those skilled in the art that the structure shown in FIG. 10 is only a block diagram of a part of the structure related to the solution of this application, and does not constitute a limitation of the computer device to which the solution of this application is applied. The specific computer device may include more or fewer components than those shown in the figures, or combine some components, or have different component arrangements.

In one embodiment, a computer device is further provided, which includes a memory and a processor. The memory stores computer-readable instructions. The processor, when executing the computer-readable instructions, implements the steps in the method embodiments described above.

In one embodiment, a computer-readable storage medium is provided, which stores computer-readable instructions. The computer-readable instructions, when executed by a processor, implement the steps in the method embodiments described above.

In one embodiment, a computer program product or a computer program is provided. The computer program product or the computer program includes computer-readable instructions. The computer-readable instructions are stored in a computer readable storage medium. A processor of a computer device reads the computer-readable instructions from the computer readable storage medium. The processor, when executing the computer-readable instructions, causes the computer device to implement the steps in the method embodiments described above.

A person of ordinary skill in the art may understand that all or some of procedures of the method in the above embodiments may be implemented by computer-readable instructions by instructing relevant hardware. The computer-readable instructions may be stored in a non-volatile computer-readable storage medium. When the computer-readable instructions are executed, the procedures of the above method embodiments may be implemented. Any reference to a memory, storage, database, or other medium used in various embodiments provided by this application may include at least one of non-volatile and volatile memories. The non-volatile memory may include a read-only memory (ROM), a magnetic tape, a floppy disk, a flash memory, an optical storage, or the like. The volatile memory may include a random access memory (RAM) or an external cache memory. By way of illustration and not limitation, the RAM may be in a variety of forms such as a static random access memory (SRAM) or a dynamic random access memory (DRAM).

The technical features of the above embodiments may be arbitrarily combined. For the sake of brevity of description, all possible combinations of the technical features in the above embodiments are not described. However, as long as there is no contradiction in the combination of these technical features, it is considered to be the range described in this specification.

The above embodiments are merely illustrative of several implementation manners of this application with specific and detailed description, and are not to be construed as limiting the patent scope of the disclosure. Many variations and modifications may be made by those of ordinary skill in the art without departing from the conception of this application. All of these belong to the scope of protection of this application. Therefore, the scope of protection of this application is to be determined by the appended claims.

**Claims**

1. A video behavior recognition method, performed by a computer device, comprising:

    extracting a video image feature from at least two video images;
    performing contribution adjustment on a spatial feature of the video image feature to obtain an intermediate image feature;
    fusing, based on priori information, a temporal feature of the intermediate image feature and a cohesive feature corresponding to the temporal feature to obtain a fused feature, the priori information being obtained according to change information of the intermediate image feature in a temporal dimension, and the cohesive feature being obtained by performing attention processing on the temporal feature;
    performing temporal feature contribution adjustment on the fused feature to obtain a behavior recognition feature; and
    performing video behavior recognition based on the behavior recognition feature.

2. The method according to claim 1, wherein the performing contribution adjustment on a spatial feature of the video image feature to obtain an intermediate image feature comprises:

    performing spatial feature extraction on the video image feature to obtain the spatial feature of the video image feature, and
    performing contribution adjustment on the spatial feature based on a spatial structural parameter of a structural parameter to obtain the intermediate image feature, the structural parameter being obtained by training based on a video image sample carrying a behavior label, and wherein

the performing temporal feature contribution adjustment on the fused feature to obtain a behavior recognition feature comprises:

performing contribution adjustment on the fused feature based on a temporal structural parameter of the structural parameter to obtain the behavior recognition feature.

3. The method according to claim 2, further comprising:

determining a to-be-trained structural parameter;

performing contribution adjustment on a spatial sample feature of a video image sample feature based on the spatial structural parameter of the to-be-trained structural parameter to obtain an intermediate sample feature, the video image sample feature being extracted from the video image sample;

fusing, based on priori sample information, a temporal sample feature of the intermediate sample feature and a cohesive sample feature corresponding to the temporal sample feature to obtain a fused sample feature, the cohesive sample feature being obtained by performing attention processing on the temporal sample feature, and the priori sample information being obtained according to change information of the intermediate sample feature in a temporal dimension;

performing contribution adjustment on the fused sample feature based on the temporal structural parameter of the to-be-trained structural parameter to obtain the behavior recognition sample feature; and

performing video behavior recognition based on the behavior recognition sample feature, updating the to-be-trained structural parameter according to the behavior recognition result and the behavior label corresponding to the video image sample, and performing training continually until the training is ended to obtain the structural parameter.

4. The method according to claim 3, wherein the method is implemented by a video behavior recognition model, and the to-be-trained structural parameter is a parameter of the video behavior recognition model during training, and wherein

the updating the to-be-trained structural parameter according to the behavior recognition result and the behavior label corresponding to the video image sample, and performing training continually until the training is ended to obtain the structural parameter comprises:

obtaining a behavior recognition result outputted from the video behavior recognition model;

determining a difference between the behavior recognition result and the behavior label corresponding to the video image sample;

updating a model parameter of the video behavior recognition model and the to-be-trained structural parameter according to the difference; and

performing training continually based on the updated video behavior recognition model until the training is ended, and obtaining the structural parameter of the trained video behavior recognition model.

5. The method according to claim 3, wherein the updating the to-be-trained structural parameter according to the behavior recognition result and the behavior label corresponding to the video image sample, and performing training continually until the training is ended to obtain the structural parameter comprises:

determining a behavior recognition loss between the behavior recognition result and the behavior label corresponding to the video image sample;

obtaining a reward according to the behavior recognition loss and a previous behavior recognition loss; and

updating the to-be-trained structural parameter according to the reward, and performing training continually based on the updated to-be-trained structural parameter to obtain the structural parameter until a target function satisfies an ending condition, the target function being obtained based on the reward in a training process.

6. The method according to claim 5, wherein the updating the to-be-trained structural parameter according to the reward comprises:

updating a model parameter of a policy gradient network model according to the reward; and

updating the to-be-trained structural parameter based on the updated policy gradient network model.

7. The method according to claim 6, wherein the updating the to-be-trained structural parameter based on the updated policy gradient network model comprises:

performing, by the updated policy gradient network model, structural parameter prediction based on the updated model parameter and the to-be-trained structural parameter to obtain a predicted structural parameter; and obtaining, according to the predicted structural parameter, the structural parameter after the to-be-trained structural parameter is updated.

8. The method according to claim 1, further comprising:

determining a similarity of intermediate image features in the temporal dimension; and correcting initial priori information based on the similarity to obtain the priori information.

9. The method according to claim 8, wherein the initial priori information comprises a first initial priori parameter and a second initial priori parameter; and the correcting initial priori information based on the similarity to obtain the priori information comprises:

dynamically adjusting the similarity according to the first initial priori parameter, the second initial priori parameter, and a preset threshold; correcting the first initial priori parameter and the second initial priori parameter based on the dynamically adjusted similarity to obtain a first priori parameter and a second priori parameter; and obtaining the priori information according to the first priori parameter and the second priori parameter.

10. The method according to claim 1, further comprising:

determining a current base vector; performing feature reconstruction on the temporal feature of the intermediate image feature based on the current base vector to obtain a reconstructed feature; generating a next base vector for attention processing according to the reconstructed feature and the temporal feature; and obtaining the cohesive feature corresponding to the temporal feature according to the next base for attention processing, the base vector, and the temporal feature.

11. The method according to claim 10, wherein the generating a next base vector for attention processing according to the reconstructed feature and the temporal feature comprises:

fusing the reconstructed feature and the temporal feature to generate an attention feature; performing regularization on the attention feature to obtain a regularized feature; and performing moving average updating on the regularized feature to generate the next base vector for attention processing.

12. The method according to claim 10, wherein the current base vector comprises a data size in batch processing, a number of channels of the intermediate image feature, and a dimension of the base vector, and wherein

the performing feature reconstruction on the temporal feature of the intermediate image feature based on the current base vector to obtain a reconstructed feature comprises: performing matrix multiplication and normalized mapping on the current base vector and the temporal feature of the intermediate image feature in sequence to obtain the reconstructed feature; the generating a next base vector for attention processing according to the reconstructed feature and the temporal feature comprises: performing matrix multiplication on the reconstructed feature and the temporal feature to obtain the next base vector for attention processing; and the obtaining the cohesive feature corresponding to the temporal feature according to the next base vector for attention processing, the base vector, and the temporal feature comprises: fusing the next base vector for attention processing, the base vector, and the temporal feature to obtain the cohesive feature corresponding to the temporal feature.

13. The method according to any one of claims 1 to 12, wherein the fusing, based on priori information, a temporal feature of the intermediate image feature and a cohesive feature corresponding to the temporal feature to obtain a fused feature comprises:

determining the priori information;
performing temporal feature extraction on the intermediate image feature to obtain the temporal feature of the intermediate image feature; and
performing, based on the priori information, weighting and fusion on the temporal feature and the cohesive feature corresponding to the temporal feature to obtain the fused feature.

14. The method according to claim 13, wherein the priori information comprises the first priori parameter and the second priori parameter, and wherein
the performing, based on the priori information, weighting and fusion on the temporal feature and the cohesive feature corresponding to the temporal feature to obtain the fused feature comprises:

performing weighting on the temporal feature based on the first priori parameter to obtain the weighted temporal feature;
performing, based on the second priori parameter, weighting on the cohesive feature corresponding to the temporal feature to obtain the weighted cohesive feature; and
fusing the weighted temporal feature and the weighted cohesive feature to obtain the fused feature.

15. The method according to claim 1, wherein before the fusing, based on priori information, a temporal feature of the intermediate image feature and a cohesive feature corresponding to the temporal feature to obtain a fused feature, the method further comprises:

performing normalization on the intermediate image feature to obtain a normalized feature, and
performing nonlinear mapping according to the normalized feature to obtain a mapped intermediate image feature, and wherein
the fusing, based on priori information, a temporal feature of the intermediate image feature and a cohesive feature corresponding to the temporal feature to obtain a fused feature comprises:
fusing, based on the priori information, the temporal feature of the mapped intermediate image feature and the cohesive feature corresponding to the temporal feature to obtain the fused feature, the priori information being obtained according to change information of the mapped intermediate image feature in a temporal dimension.

16. The method according to claim 15, wherein the performing normalization on the intermediate image feature to obtain a normalized feature comprises:

performing normalization on the intermediate image feature through a batch normalization layer structure to obtain the normalized feature, and wherein
the performing nonlinear mapping according to the normalized feature to obtain a mapped intermediate image feature comprises:
performing nonlinear mapping on the normalized feature through an activation function to obtain the mapped intermediate image feature.

17. A video behavior recognition apparatus, comprising:

a video image feature extraction module, configured to extract a video image feature from at least two video images;
a spatial feature contribution adjustment module, configured to perform contribution adjustment on a spatial feature of the video image feature to obtain an intermediate image feature;
a feature fusion module, configured to fuse, based on priori information, a temporal feature of the intermediate image feature and a cohesive feature corresponding to the temporal feature to obtain a fused feature, the priori information being obtained according to change information of the intermediate image feature in a temporal dimension, and the cohesive feature being obtained by performing attention processing on the temporal feature;
a temporal feature contribution adjustment module, configured to perform temporal feature contribution adjustment on the fused feature to obtain a behavior recognition feature; and
a video behavior recognition module, configured to perform video behavior recognition based on the behavior recognition feature.

18. A computer device, comprising a memory and a processor, the memory storing computer-readable instructions, the processor, when executing the computer-readable instructions, implementing steps of the method according to any one of claims 1 to 16.

19. A computer-readable storage medium, storing computer-readable instructions, the computer-readable instructions, when executed by a processor, implementing steps of the method according to any one of claims 1 to 16.

20. A computer program product, comprising computer-readable instructions, the computer-readable instructions, when executed by a processor, implementing steps of the method according to any one of claims 1 to 16.

FIG. 1

202

Extract a video image feature from at least two frames of target video images

204

Perform contribution adjustment on a spatial feature of the video image feature to obtain an intermediate image feature

206

Fuse, based on priori information, a temporal feature of the intermediate image feature and a cohesive feature corresponding to the temporal feature to obtain a fused feature, the priori information being obtained according to change information of the intermediate image feature in a temporal dimension, and the cohesive feature being obtained by performing attention processing on the temporal feature

208

Perform temporal feature contribution adjustment on the fused feature to obtain a behavior recognition feature

210

Perform video behavior recognition based on the behavior recognition feature

FIG. 2

302

Determine a current base vector

304

Perform feature reconstruction on the temporal feature of the intermediate image feature based on the current base vector to obtain a reconstructed feature

306

Generate a next base vector for attention processing according to the reconstructed feature and the temporal feature

308

Obtain the cohesive feature corresponding to the temporal feature according to the next base vector subjected to attention processing, the base vector, and the temporal feature

FIG. 3

FIG. 4

```
┌─────────────────────────────┐
│     Convolution, 1×d×d      │
├─────────────────────────────┤
│      Spatial structural     │
│       parameter α1          │
└─────────────────────────────┘
              │
              ▼
┌─────────────────────────────┐
│     Batch normalization     │
└─────────────────────────────┘
              │
              ▼
┌─────────────────────────────┐
│      Activation function    │
└─────────────────────────────┘
```

| Convolution, t×1×1 | Convolution, t×1×1 |
|---|---|
| Structural parameter β1 | Structural parameter β2 |
| Temporal structural parameter α2 | |

FIG. 5

1×d×d
Convolutiona
l layer

t×1×1
Convolutiona
l layer

Node0     Node0     Node0

α11   α1i   α1n    α1i   α1n      α1n

α21   α2j   α2m    α21   α2j      α21

Node1     Node1     Node1

# FIG. 6

FIG. 7

FIG. 8

Video behavior recognition apparatus 900

902

Video image feature extraction
module

904

Spatial feature contribution
adjustment module

906

Feature fusion module

908

Temporal feature contribution
adjustment module

910

Video behavior recognition module

FIG. 9

FIG. 10

| INTERNATIONAL SEARCH REPORT | International application No. |
|---|---|
| | **PCT/CN2022/116947** |

| A. CLASSIFICATION OF SUBJECT MATTER |
|---|
| G06V 20/40(2022.01)i; G06V 10/80(2022.01)i; G06V 10/40(2022.01)i; G06K 9/62(2022.01)i |
| According to International Patent Classification (IPC) or to both national classification and IPC |

| B. FIELDS SEARCHED |
|---|
| Minimum documentation searched (classification system followed by classification symbols) |
| G06V G06K |
| Documentation searched other than minimum documentation to the extent that such documents are included in the fields searched |
| Electronic data base consulted during the international search (name of data base and, where practicable, search terms used) |
| CNABS; CNTXT; CNKI; WPABS; DWPI; USTXT; WOTXT; EPTXT; IEEE: 腾讯科技, 视频, 图像, 行为, 识别, 空间, 时间, 贡献, 融合, 内聚特征, 调整, video, image, behavior, recognition, spatial, time, contribution, fuse, cohesion, adjustment |

| C. DOCUMENTS CONSIDERED TO BE RELEVANT |
|---|

| Category* | Citation of document, with indication, where appropriate, of the relevant passages | Relevant to claim No. |
|---|---|---|
| PX | CN 114332670 A (TENCENT TECHNOLOGY SHENZHEN CO., LTD.) 12 April 2022 (2022-04-12) claims 1-16, and description, paragraphs [0046]-[0195] | 1-20 |
| A | CN 113378600 A (BEIJING LYNXI TECHNOLOGY CO., LTD.) 10 September 2021 (2021-09-10) description, paragraphs [0118]-[0237] | 1-20 |
| A | CN 110096950 A (NORTHWESTERN UNIVERSITY) 06 August 2019 (2019-08-06) entire document | 1-20 |
| A | CN 111950444 A (BEIJING NORMAL UNIVERSITY, ZHUHAI) 17 November 2020 (2020-11-17) entire document | 1-20 |
| A | KR 20200036093 A (NAVER WEBTOON CORP.) 07 April 2020 (2020-04-07) entire document | 1-20 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 October 2022** | **25 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/116947**

| Patent document cited in search report | | | Publication date (day/month/year) | Patent family member(s) | | | Publication date (day/month/year) |
|---|---|---|---|---|---|---|---|
| CN | 114332670 | A | 12 April 2022 | None | | | |
| CN | 113378600 | A | 10 September 2021 | WO | 2021180030 | A1 | 16 September 2021 |
| CN | 110096950 | A | 06 August 2019 | None | | | |
| CN | 111950444 | A | 17 November 2020 | None | | | |
| KR | 20200036093 | A | 07 April 2020 | KR | 102198912 | B1 | 06 January 2021 |

Form PCT/ISA/210 (patent family annex) (January 2015)

**REFERENCES CITED IN THE DESCRIPTION**

**Patent documents cited in the description**

- CN 2021112027344